(19) Europäisches Patentamt / European Patent Office / Office européen des brevets

(11) **EP 3 667 522 A1**

(12) **EUROPEAN PATENT APPLICATION**
published in accordance with Art. 153(4) EPC

(43) Date of publication:
**17.06.2020 Bulletin 2020/25**

(51) Int Cl.:
**G06F 17/14** (2006.01)

(21) Application number: **18845100.9**

(22) Date of filing: **03.08.2018**

(86) International application number:
**PCT/JP2018/029280**

(87) International publication number:
**WO 2019/031418 (14.02.2019 Gazette 2019/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2017 JP 2017152658**

(71) Applicant: **NEC Corporation Tokyo 108-8001 (JP)**

(72) Inventor: **SHIBAYAMA Atsufumi Tokyo 108-8001 (JP)**

(74) Representative: **Vossius & Partner Patentanwälte Rechtsanwälte mbB Siebertstrasse 3 81675 München (DE)**

(54) **FAST FOURIER TRANSFORM DEVICE, DATA SORTING PROCESSING DEVICE, FAST FOURIER TRANSFORM PROCESSING METHOD, AND PROGRAM RECORDING MEDIUM**

(57) In order to reduce the circuit scale of a circuit carrying out digital signal processing, this fast Fourier transform device comprises a data sorting processing means that includes: a first data sorting means for inputting a plurality of first data in a first order and sorting the plurality of first data into a third order; and a second data sorting means for inputting the plurality of first data in the third order and sorting the plurality of first data into a second order. The first data sorting means sorts the plurality of first data from the first order into the third order by using, as a unit of transfer, a data set constituted by a prescribed number of data included in the plurality of first data, and the second data sorting means sorts the plurality of first data from the third order into the second order by carrying out sorting among a prescribed number of data included in the data set.

Fig.1

**Description**

[Technical Field]

The present invention relates to a fast Fourier transform device, a data sorting processing device, a fast Fourier transform processing method, and a program for performing digital signal processing.

[Background Art]

Fast Fourier transform (hereinafter, FFT) processing is one of important processing in digital signal processing. For example, FFT is used in frequency domain equalization for compensating signal waveform distortion during transmission. In the frequency domain equalization, after signal data on a time domain are transformed into data on a frequency domain by FFT, filter processing for equalization is performed. Then, the data after filter processing are transformed again into signal data on a time domain by inverse FFT (hereinafter, IFFT), and signal waveform distortion on the original time domain is compensated. Hereinafter, when FFT and IFFT are not distinguished from each other, FFT and IFFT are described as "FFT/IFFT".

PTL 1 discloses a fast Fourier transform device constituted of a butterfly computation circuit. The device in PTL 1 is able to reduce a computation amount, as compared with a device in which a general discrete Fourier transform algorithm is employed.

NPL 1 discloses butterfly computation by Cooley-Tukey. The method in NPL1 enables performing efficient FFT/IFFT processing. However, in the method in NPL 1, there is a problem that an FFT/IFFT circuit becomes complicated, when the number of data points is large.

NPL 2 discloses a Prime Factor method in which computation having a large point number is decomposed into two small FFT/IFFT. When processing having a large point number is performed by employing the method in NPL 2, a circuit of an enormous scale is necessary in order to perform all processing. In view of the above, when the method in NPL 2 is employed, generally, processing is iterated by dividing the point number without increasing the scale of the circuit.

In butterfly computation, since data arranged in sequential order (hereinafter, sequential order) are read and processed in an order in accordance with a predetermined rule, data sorting is necessary. For example, in butterfly computation, sorting from sequential order into bit-reverse order, or conversely, sorting from bit-reverse order into sequential order is performed.

PTL 2 discloses a fast Fourier transform device in which FFT processing is performed by storing input/output data and intermediate data in a random access memory (RAM). PTL 3 discloses an FFT computation device in which memory usage is reduced by performing butterfly computation in parallel. PTL 4 discloses a fast Fourier transform computation circuit capable of performing FFT, even when the number of input data points is reduced.

[Citation List]

[Patent Literature]

[PTL 1] Japanese Unexamined Patent Application Publication No. H8 (1996)-137832
[PTL 2] Japanese Unexamined Patent Application Publication No. 2001-56806
[PTL 3] Japanese Unexamined Patent Application Publication No. 2012-22500
[PTL 4] Japanese Unexamined Patent Application Publication No. H10 (1998)-283341

[Non Patent Literature]

[NPL 1] J.W.Cooley, J.W.Tukey, "An Algorithm for the Machine Calculation of Complex Fourier Series," Mathematics of Computation, US, American Mathematical Society, Apr. 1965, Vol.19, No.90, pp.297-301.
[NPL 2] D.P.Kolba, "A Prime Factor FFT Algorithm Using High-Speed Convolution," IEEE Trans. on Acoustics, US, IEEE Signal Processing Society, Aug. 1977, Vol.29, No.4, pp.281-294

[Summary of Invention]

[Technical Problem]

In sorting between sequential order and bit-reverse order, it is necessary to output, in cycles different from each other, each of a plurality of pieces of data input in a certain cycle. Therefore, when a data sorting processing circuit is achieved by a RAM circuit on the basis of PTL 2, it is not possible to configure the data sorting processing circuit by a single RAM circuit, and it is necessary to configure the data sorting processing circuit by a plurality of RAM circuits.

Generally, a RAM circuit is constituted of a memory cell portion for storing data, and a peripheral circuit portion such as an address decoder circuit for performing data writing and reading and a sensing amplifier circuit. Therefore, even when a storage device of a same storage capacity is achieved by a RAM circuit, configuring the storage device by a plurality of RAM circuits increases a circuit scale and electric power consumption by a portion of a peripheral circuit, as compared with a case that the storage device is configured by a single RAM circuit.

The method in PTL 3 is able to reduce memory usage by performing butterfly computation processing in parallel. However, when not only butterfly computation but also FFT processing and data sorting processing are performed in parallel, there is a problem that the required number of RAM circuits increases accompanied by an increase in the number of parallel processing, and a circuit scale and electric power consumption may increase.

The method in PTL 4 enables to handle FFT of various point numbers by a single circuit. However, in the method in PTL 4, there is a problem that, when the point number of FFT is fixed, a configuration for handling a plurality of point numbers becomes redundant.

An object of the present invention is to provide a fast Fourier transform device capable of reducing a circuit scale of a circuit for performing digital signal processing, in order to solve the above-described issues.

[Solution to Problem]

A fast Fourier transform device in one aspect of the present invention includes data sorting processing means including first data sorting means for inputting a plurality of pieces of first data in a first order, and sorting the plurality of pieces of first data into a third order, and second data sorting means for inputting the plurality of pieces of first data in the third order, and sorting the plurality of pieces of first data into a second order. The first data sorting means sorts the plurality of pieces of first data from the first order into the third order by using, as a unit of transfer, a data set constituted of a predetermined number of pieces of data included in the plurality of pieces of first data, and the second data sorting means sorts the plurality of pieces of first data from the third order into the second order by performing sorting among the predetermined number of pieces of data included in the data set.

A data sorting processing device in one aspect of the present invention includes second sorting means for inputting a plurality of pieces of first data in a first order, sorting the plurality of pieces of first data into a third order by using, as a unit of transfer, a data set constituted of a predetermined number of pieces of data included in the plurality of pieces of first data, and sorting the plurality of pieces of first data sorted in the third order into a second order by performing sorting among the predetermined number of pieces of data included in the data set.

A fast Fourier transform processing method in one aspect of the present invention includes data sorting processing of inputting a plurality of pieces of first data in a first order, sorting the plurality of pieces of first data into a third order by using, as a unit of transfer, a data set constituted of a predetermined number of pieces of data included in the plurality of pieces of first data, and sorting the plurality of pieces of first data sorted in the third order into a second order by performing sorting among the predetermined number of pieces of data included in the data set.

A program in one aspect of the present invention causing a computer to execute fast Fourier transform processing includes processing of inputting a plurality of pieces of first data in a first order, processing of sorting the plurality of pieces of first data into a third order by using, as a unit of transfer, a data set constituted of a predetermined number of pieces of data included in the plurality of pieces of first data, and processing of sorting the plurality of pieces of first data sorted in the third order into a second order by performing sorting among the predetermined number of pieces of data included in the data set.

[Advantageous Effects of Invention]

The present invention is able to provide a fast Fourier transform device capable of reducing a circuit scale of a circuit for performing digital signal processing.

[Brief Description of Drawings]

[Fig. 1] Fig. 1 is a block diagram illustrating a configuration of a data sorting processing device according to a first example embodiment of the present invention.
[Fig. 2] Fig. 2 is a diagram illustrating a data array according to sequential order in fast Fourier transform (FFT) processing.
[Fig. 3] Fig. 3 is a diagram illustrating a data array according to bit-reverse order in the FFT processing.
[Fig. 4] Fig. 4 is a diagram for illustrating sorting processing in which the data sorting processing device according to the first example embodiment of the present invention sorts a plurality of pieces of data to be input in sequential order into intermediate order.
[Fig. 5] Fig. 5 is a diagram for illustrating processing in which the data sorting processing device according to the first example embodiment of the present invention sorts a plurality of pieces of data sorted into intermediate order into bit-reverse order.
[Fig. 6] Fig. 6 is a block diagram illustrating a configuration of a data sorting processing device according to a second example embodiment of the present invention.
[Fig. 7] Fig. 7 is a time chart for illustrating an operation of a first data distributing unit included in a first data sorting unit of the data sorting processing device according to the second example embodiment of the present invention.
[Fig. 8] Fig. 8 is a time chart for illustrating an operation of a random access memory (RAM) circuit of the first data sorting unit included in a data sorting processing unit according to the second example embodiment of the present invention.
[Fig. 9] Fig. 9 is a time chart for illustrating an operation of a second data distributing unit in the first data sorting unit of the data sorting processing device according to the second example embodiment of the present invention.

[Fig. 10] Fig. 10 is a time chart for illustrating an operation of a second data sorting unit of the data sorting processing device according to the second example embodiment of the present invention.

[Fig. 11] Fig. 11 is a block diagram illustrating a configuration of a general data sorting processing device.

[Fig. 12] Fig. 12 is a block diagram illustrating a configuration of an intra-data-set sorting device according to a third example embodiment of the present invention.

[Fig. 13] Fig. 13 is a time chart for illustrating an operation of the intra-data-set sorting device according to the third example embodiment of the present invention.

[Fig. 14] Fig. 14 is a block diagram illustrating a configuration of a computation device including an FFT device according to a fourth example embodiment of the present invention.

[Fig. 15] Fig. 15 is a conceptual diagram for illustrating a dataflow of 64 points FFT processing employing two-stage butterfly computation.

[Fig. 16] Fig. 16 is a block diagram illustrating a configuration of a digital filter device according to a fifth example embodiment of the present invention.

[Fig. 17] Fig. 17 is a block diagram illustrating one example of a hardware configuration for achieving the digital filter device according to the fifth example embodiment of the present invention.

[Example Embodiment]

In the following, example embodiments for implementing the present invention are described with reference to the drawings. The example embodiments described in the following include technically preferred limitations for implementing the present invention. However, the scope of the present invention is not limited to the following. Note that, in all drawings used in description of the following example embodiments, unless a reason is specifically mentioned, similar elements are indicated with same reference signs. Further, in the following example embodiments, repeated description on a similar configuration/operation may be omitted. Further, directions of arrows in the drawings indicate one example, and do not limit directions of signals among blocks.

(First Example Embodiment)

First, a data sorting processing device according to a first example embodiment of the present invention is described with reference to the drawings. A data sorting processing device according to the present example embodiment achieves data sorting processing between sequential order and bit-reverse order, which is necessary in butterfly computation of fast Fourier transform (FFT) processing, by a two-stage step via intermediate order. In the following, an example in which a plurality of pieces of data are processed in parallel by being divided into a plurality of cycles is described.

(Configuration)

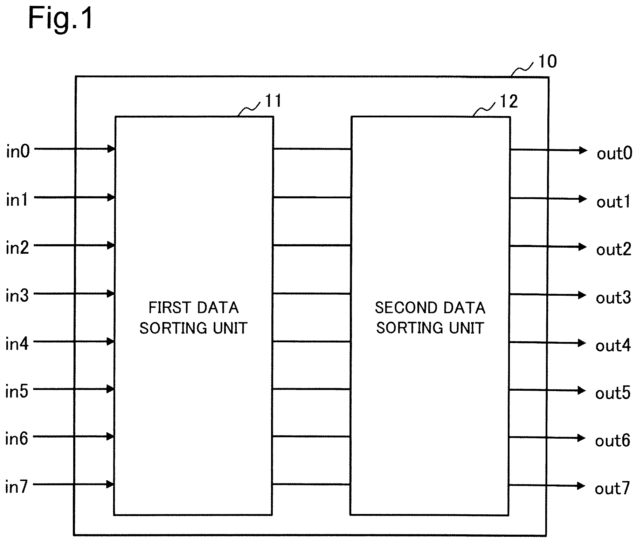

Fig. 1 is a block diagram illustrating a configuration of a data sorting processing device 10 according to the present example embodiment. As illustrated in Fig. 1, the data sorting processing device 10 (also referred to as a data sorting processing means) according to the present example embodiment includes a first data sorting unit 11 and a second data sorting unit 12.

The first data sorting unit 11 (also referred to as a first data sorting means) receives, as an input, a plurality of pieces of data in a first order. The first data sorting unit 11 sorts the plurality of pieces of data by using, as a unit, a data set constituted of at least two pieces of data among the plurality of pieces of input data. In other words, the first data sorting unit 11 receives, as an input, a plurality of pieces of first data in the first order. And then, the first data sorting unit 11 sorts the plurality of pieces of first data into intermediate order (also referred to as a third order) by using, as a unit of transfer, a data set constituted of a predetermined number of pieces of data included in the plurality of pieces of first data. The first data sorting unit 11 outputs, to the second data sorting unit 12, the plurality of pieces of data sorted into intermediate order.

In the example of Fig. 1, the first data sorting unit 11 receives, as an input, a plurality of pieces of data from a plurality of different input terminals (in0 to 7) in the first order. The first order is, for example, sequential order or bit-reverse order.

Further, the first data sorting unit 11 receives, as an input, a plurality of pieces of data by dividing the plurality of pieces of data into a plurality of cycles. The first data sorting unit 11 temporarily stores the plurality of pieces of data to be input, and sorts the plurality of pieces of data into intermediate order by sorting a data set constituted of at least two pieces of data among the plurality of pieces of data to be input in consecutive cycles. For example, the first data sorting unit 11 sorts a plurality of pieces of first data into the third order by using, as a unit of transfer, a plurality of pieces of data (also referred to as a data set), which is constituted of data to be input in parallel in a plurality of consecutive cycles.

The second data sorting unit 12 (also referred to as a second data sorting means) receives, as an input, the plurality of pieces of data sorted by the first data sorting unit 11. The second data sorting unit 12 sorts the plurality of pieces of input data into a second order by sorting the plurality of pieces of input data within a data set. In other words, the second data sorting unit 12 receives, as an input, a plurality of pieces of first data in the third order. And then, the second data sorting unit 12 sorts the plurality of pieces of first data into the second order by performing sorting among a predetermined number of pieces of data included in a data set. The second data sorting unit 12 outputs the plurality of pieces of data in the second order.

In the example of Fig. 1, the second data sorting unit 12 outputs a plurality of pieces of data from a plurality of different output terminals (out0 to 7) in the second order. The second order is, for example, bit-reverse order when the first order is sequential order, and sequential order when the first order is bit-reverse order. Specifically, the data sorting processing device 10 according to the present example embodiment sorts a plurality of pieces of data input in sequential order or bit-reverse order (first order) into bit-reverse order or sequential order (second order) by a two-stage step, and outputs.

Specifically, the data sorting processing device 10 according to the present example embodiment sorts a plurality of pieces of data from the first order into the second order by a two-stage step.

[Data Order]

Herein, an order of a plurality of pieces of data being a processing target of the data sorting processing device 10 according to the present example embodiment is described by a specific example. In the following, an example is described in which sixty-four pieces of data to which numbers 0 to 63 (hereinafter, referred to as data numbers) are appended are input as a plurality of pieces of data.

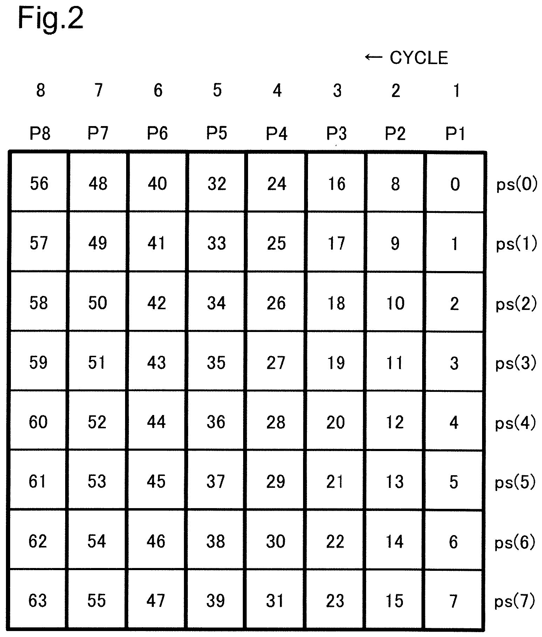

Fig. 2 illustrates sequential order with respect to sixty-four pieces of data. The numbers indicated in grids of Fig. 2 denote data numbers. In the following, data of a data number m may be indicated only by the data number (m is a natural number; m=0 to 63).

In the present example embodiment, sequential order is an order of eight data arrays P1, P2, P3, P4, P5, P6, P7, and P8 illustrated in Fig. 2. Note that the number of each data array is a value indicating an order of a processing cycle. Data array Ps is constituted of eight pieces of data arranged in an order from ps(0) to ps(7) (s=1, ..., 8). Further, ps(i) is expressed by the following equation 1 (i=1, ..., 8).

$$ps(i)=8(s-1)+i \dots (1)$$

The data arrays in sequential order are arranged in an order of P1, P2, P3, P4, P5, P6, P7, and P8 in association with progress of a processing cycle. Specifically, sequential order is such that s data arrays are generated by arranging i×s pieces of data in an order of data for each i pieces of data from the leading piece of data, and the data arrays are arranged in a cycle order.

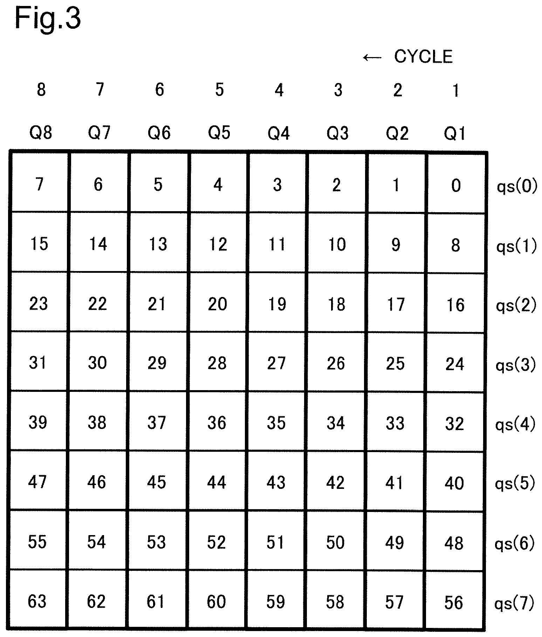

On the other hand, Fig. 3 illustrates bit-reverse order associated with sequential order in Fig. 2. In the present example embodiment, bit-reverse order is an order of eight data arrays Q1, Q2, Q3, Q4, Q5, Q6, Q7, and Q8 illustrated in Fig. 3. Note that numbers of data arrays are values indicating an order of a processing cycle. Data array Qs is constituted of eight pieces of data arranged in an order from qs(0) to qs(7) (s=1, ... , 8). Further, qs(i) is expressed by the following equation 2 (i=1, ..., 8).

$$qs(i)=(s-1)+8i \dots (2)$$

The data arrays in bit-reverse order are arranged in an order of Q1, Q2, Q3, Q4, Q5, Q6, Q7, and Q8 in association with progress of a processing cycle. Specifically, bit-reverse order is such that i×s pieces of data input in sequential order are arranged in a cycle order for each s pieces of data from the leading piece of data, and are arranged in an order of data by using i pieces of data of a same cycle as one set.

As described above, when sets of sequential order are set, data arrays in bit-reverse order are uniquely determined. Data Qs(i) being the i-th piece of data constituting each data array Qs in bit-reverse order is data Pi(s) being the s-th piece of data in cycle i according to sequential order. Specifically, a relationship expressed by the following equation 3 is established between Pi(s) and Qs(i).

$$Qs(i)=Pi(s) \dots (3)$$

Qs(i) and Pi(s) have a relationship in which an order with respect to progress of a cycle, and an order with respect to a data position are interchanged regarding data constituting data arrays. Therefore, when data input in bit-reverse order are sorted according to bit-reverse order, the data are sorted into sequential order.

[Sorting Processing]

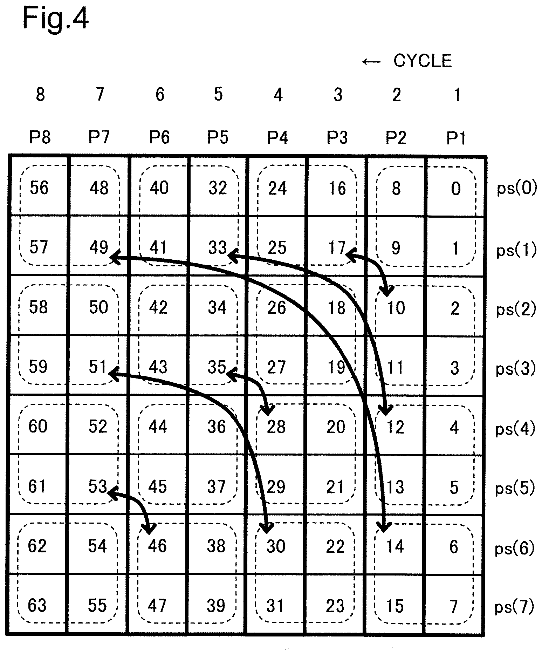

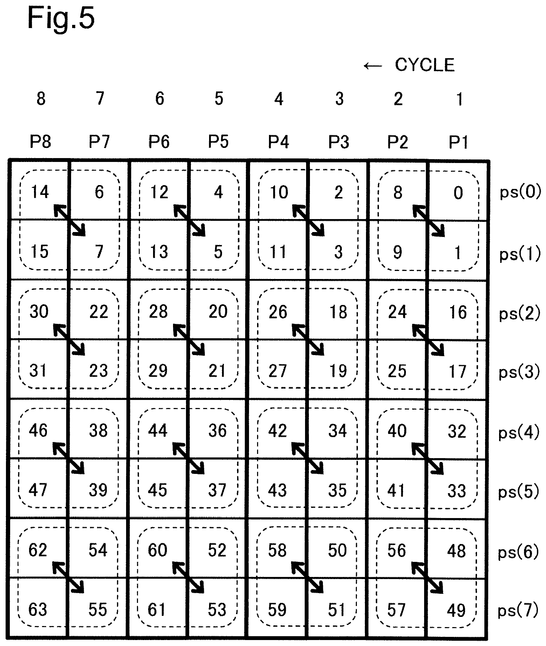

Herein, two-stage sorting processing of the data sorting processing device 10 according to the present example embodiment is described with reference to the drawings. Fig. 4 is a diagram for illustrating sorting a plurality of pieces of data, when the first data sorting unit 11 performs sorting processing from sequential order into intermediate order, by using, as a unit, a data set constituted of a predetermined number of (four) pieces of data. Fig. 5 is a diagram for illustrating a plurality of pieces of data sorted into intermediate order. In the following, sorting processing by the first data sorting unit 11, and sorting processing by the second data sorting unit 12 are described separately.

[First Data Sorting Unit]

The first data sorting unit 11 sorts a plurality of pieces of data into intermediate order (Fig. 5) by sorting data sets connected by arrows in the unit of a data set constituted of four pieces of data surrounded by a dotted line in sequential order (Fig. 4). Specifically, the first data sorting unit 11 receives, as an input, a plurality of pieces of first data in the first order. And then, the first data sorting unit 11 sorts the plurality of pieces of first data into intermediate order (third order) by using, as a unit of transfer, a data set constituted of a predetermined number of pieces of data included in the plurality of pieces of first data. More specifically, the first data sorting unit 21 performs the following six sorting operations, and performs sorting processing from sequential order (Fig. 4) into intermediate order (Fig. 5). Note that the following sorting in the unit of a data set does not need to be performed in the described order.

Firstly, the first data sorting unit 11 sorts a data set constituted of {2, 3, 10, 11}, and a data set constituted of {16, 17, 24, 25}.

Secondly, the first data sorting unit 11 sorts a data set constituted of {4, 5, 12, 13}, and a data set constituted of {32, 33, 40, 41}.

Thirdly, the first data sorting unit 11 sorts a data set constituted of {6, 7, 14, 15}, and a data set constituted of {48, 49, 56, 57}.

Fourthly, the first data sorting unit 11 sorts a data set constituted of {20, 21, 28, 29}, and a data set constituted of {34, 35, 42, 43}.

Fifthly, the first data sorting unit 11 sorts a data set constituted of {22, 23, 30, 31}, and a data set constituted of {50, 51, 58, 59}.

Sixthly, the first data sorting unit 11 sorts a data set constituted of {38, 39, 46, 47}, and a data set constituted of {52, 53, 60, 61}.

By the above-described six sorting operations, the first data sorting unit 11 sorts the plurality of pieces of data from sequential order (Fig. 4) into intermediate order (Fig. 5).

[Second Data Sorting Unit]

The second data sorting unit 12 sorts the plurality of pieces of data sorted into intermediate order by the first data sorting unit 11 from intermediate order (Fig. 5) into bit-reverse order (Fig. 3). Specifically, the second data sorting unit 12 receives, as an input, a plurality of pieces of first data in intermediate order (third order), and sorts the plurality of pieces of first data into the second order by performing sorting among a predetermined number of pieces of data included in a data set. The second data sorting unit 12 sorts data pairs connected by arrows within each data set constituted of four pieces of data indicated by the dotted line in intermediate order (Fig. 5). The second data sorting unit 12 performs the following sixteen ways of sorting operations within each data set, and sorts the plurality of pieces of data from intermediate order (Fig. 5) into bit-reverse order (Fig. 3).

In first and second cycles, the second data sorting unit 12 sorts data as follows within each data set.

Specifically, the second data sorting unit 12 sorts 1 and 8 within a data set constituted of {0, 1, 8, 9}, and sorts 17 and 24 within the data set constituted of {16, 17, 24, 25}. Likewise, the second data sorting unit 12 sorts 33 and 40 within the data set constituted of {32, 33, 40, 41}, and sorts 49 and 56 within the data set constituted of {48, 49, 56, 57}.

In third and fourth cycles, the second data sorting unit 12 sorts data as follows within each data set.

Specifically, the second data sorting unit 12 sorts 3 and 10 within the data set constituted of {2, 3, 10, 11}, and sorts 19 and 26 within the data set constituted of {18, 19, 26, 27}. Likewise, the second data sorting unit 12 sorts 35 and 42 within the data set constituted of {34, 35, 42, 43}, and sorts 51 and 58 within the data set constituted of {50, 51, 58, 59}.

In fifth and sixth cycles, the second data sorting unit 12 sorts data as follows within each data set.

Specifically, the second data sorting unit 12 sorts 5 and 12 within the data set constituted of {4, 5, 12, 13}, and sorts 21 and 28 within the data set constituted of {20, 21, 28, 29}. Likewise, the second data sorting unit 12 sorts 37 and 44 within the data set constituted of {36, 37, 44, 45}, and sorts 53 and 60 within the data set constituted of {52, 53, 60, 61}.

In seventh and eighth cycles, the second data sorting unit 12 sorts data as follows within each data set.

Specifically, the second data sorting unit 12 sorts 7 and 14 within the data set constituted of {6, 7, 14, 15}, and sorts 23 and 30 within the data set constituted of {22, 23, 30, 31}. Likewise, the second data sorting unit 12 sorts 39 and 46 within the data set constituted of {38, 39, 46, 47}, and sorts 55 and 62 within the data set constituted of {54, 55, 62, 63}.

By the above-described sixteen ways of sorting operations, the second data sorting unit 12 performs sorting processing from intermediate order (Fig. 5) into bit-reverse order (Fig. 3).

(Advantageous Effect)

As described above, a data sorting processing device according to the present example embodiment achieves, by a two-stage step via intermediate order, data sorting processing between sequential order and bit-reverse order, which is necessary in butterfly computation of FFT processing.

As illustrated in Figs. 2 and 3, in sorting processing from sequential order into bit-reverse order, or sorting processing from bit-reverse order into sequential order, it is necessary to output each of a plurality of pieces of data input in a certain cycle in a cycle different from each other. Generally, when these data sorting processing are achieved by a random access memory (RAM) circuit, since it is not possible to configure the processing by a single RAM circuit, it is necessary to configure the processing by a plurality of RAM circuits. For example, in a general technique of directly performing sorting from sequential order into bit-reverse order in 8 parallel, eight RAM circuits are necessary.

On the other hand, in the present example embodiment, it is possible to perform sorting from sequential order into intermediate order, which is performed as first stage sorting, by four RAM circuits. Specifically, the present example embodiment is able to reduce the number of RAM circuits to one-half in a circuit for processing sorting from sequential order into bit-reverse order. Consequently, the present example embodiment is able to reduce a circle scale and electric power consumption by a portion corresponding to a peripheral circuit portion of a RAM circuit. In particular, when the number of pieces of data to be processed in parallel is large, since the required number of RAM circuits increases, the above configuration can advantageously reduce a circuit scale and electric power consumption.

Further, in the method according to the present example embodiment, as second stage sorting, a means for performing sorting processing from intermediate order into bit-reverse order is added. In the method according to the present example embodiment, since sorting between adjacent cycles is performed as second stage sorting, it is possible to configure a second data sorting means by a few number of flipflops of and selectors. Therefore, in the present example embodiment, a circuit scale and electric power consumption of a circuit necessary for second stage sorting is reduced, as compared with a circuit scale and electric power consumption of a circuit necessary for first stage sorting. Specifically, the present example embodiment is able to reduce an overall circuit scale and electric power consumption by a portion corresponding to a reduced number of RAM circuits necessary for first stage sorting.

(Second Example Embodiment)

Next, a data sorting processing device according to a second example embodiment of the present invention is described with reference to the drawings.

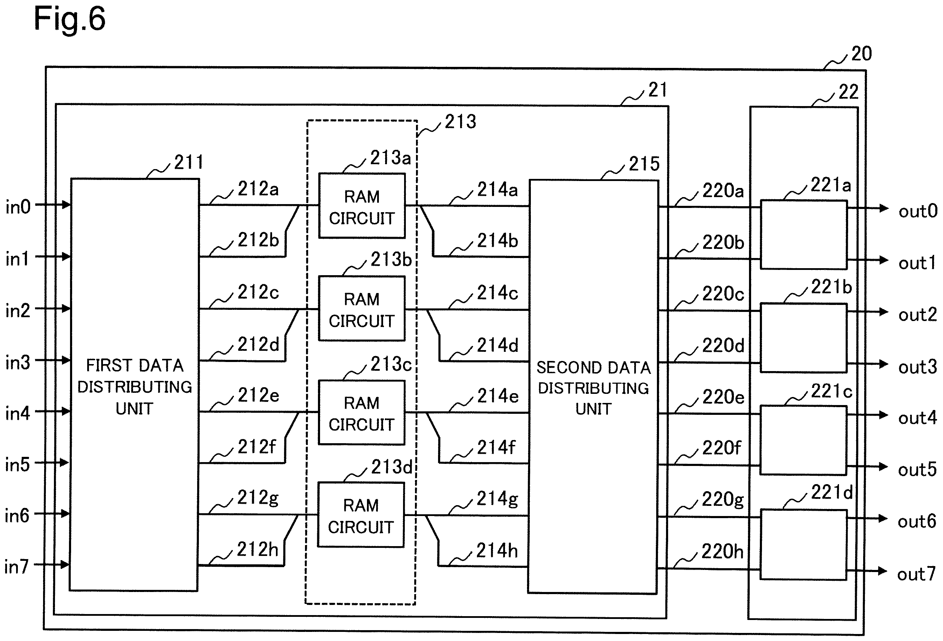

Fig. 6 is a block diagram illustrating a configuration of a data sorting processing device 20 according to the present example embodiment. As illustrated in Fig. 6, the data sorting processing device 20 includes a first data sorting unit 21 and a second data sorting unit 22. In the following, a configuration of each of the first data sorting unit 21 and the second data sorting unit 22 is described in detail.

[First Data Sorting Unit]

The first data sorting unit 21 includes a first data distributing unit 211, a RAM circuit 213, and a second data distributing unit 215.

The first data distributing unit 211 (also referred to as a first data distributing means) simultaneously receives, as an input, eight pieces of input data from eight input terminals in0 to 7. The first data distributing unit 211 distributes and outputs the eight pieces of input data to eight signal lines 212a to h.

The RAM circuit 213 (also referred to as a first storage circuit) include four circuits, namely, a RAM circuit 213a, a RAM circuit 213b, a RAM circuit 213c, and a RAM circuit 213d. The RAM circuit 213 performs writing processing and reading processing in the unit of a word constituted of a plurality of data bits.

The RAM circuit 213a stores, as a set, two pieces of data output by the first data distributing unit 211 to the signal line 212a and the signal line 212b. The RAM circuit 213a outputs again, as two pieces of data, the data stored as the set to a signal line 214a and a signal line 214b.

The RAM circuit 213b stores, as a set, two pieces of data output by the first data distributing unit 211 to the signal line 212c and the signal line 212d. The RAM circuit 213b outputs again, as two pieces of data, the data stored as the set to a signal line 214c and a signal line 214d.

The RAM circuit 213c stores, as a set, two pieces of data output by the first data distributing unit 211 to the signal line 212e and the signal line 212f. The RAM circuit 213c outputs again, as two pieces of data, the data stored as the set to a signal line 214e and a signal line 214f.

The RAM circuit 213d stores, as a set, two pieces of data output by the first data distributing unit 211 to the signal line 212g and the signal line 212h. The RAM circuit 213d outputs again, as two pieces of data, the data stored as the set to a signal line 214g and a signal line 214h.

The second data distributing unit 215 (also referred to as a second data distributing means) simultaneously inputs the eight pieces of data from the eight signal lines 214a to h. The second data distributing unit 215 distributes and outputs the input eight pieces of data to eight signal lines 220a to h.

[Second Data Sorting Unit]

The second data sorting unit 22 includes at least one intra-data-set sorting unit 221. In the present example embodiment, the second data sorting unit 22 includes four intra-data-set sorting units 221 (an intra-data-set sorting unit 221a, an intra-data-set sorting unit 221b, an intra-data-set sorting unit 221c, and an intra-data-set sorting unit 221d). The intra-data-set sorting unit 221 includes a second storage unit (not illustrated) for performing data writing processing and reading processing that do not depend on the unit of a word. The second storage circuit is different from the first storage circuit in configuration and characteristic. A circuit configuration of the second storage circuit is determined based on a processing unit of data writing processing and reading processing. The second storage circuit stores data of a cycle number smaller than that of the first storage circuit. In other words, the first storage circuit stores data of a cycle number larger than that of the second storage circuit.

The intra-data-set sorting unit 221a inputs a data set from the two signal lines 220a and 220b, and performs sorting processing within the data set constituted of four pieces of data. The intra-data-set sorting unit 221a outputs, to the output terminal out0 and the output terminal out1, the data that have been subjected to sorting processing.

The intra-data-set sorting unit 221b inputs a data set from the two signal lines 220c and 220d, and performs sorting processing within the data set constituted of four pieces of data. The intra-data-set sorting unit 221b outputs, to the output terminal out2 and the output terminal out3, the data that have been subjected to sorting processing.

The intra-data-set sorting unit 221c inputs a data set from the two signal lines 220e and 220f, and performs sorting processing within the data set constituted of four pieces of data. The intra-data-set sorting unit 221c outputs, to the output terminal out4 and the output terminal out5, the data that have been subjected to sorting processing.

The intra-data-set sorting unit 221d inputs a data set from the two signal lines 220g and 220h, and performs sorting processing within the data set constituted of four pieces of data. The intra-data-set sorting unit 221d outputs, to the output terminal out6 and the output terminal out7, the data that have been subjected to sorting processing.

The foregoing is description about a configuration of the data sorting processing device 20. Subsequently, an operation of the data sorting processing device 20 is specifically described.

(Operation)

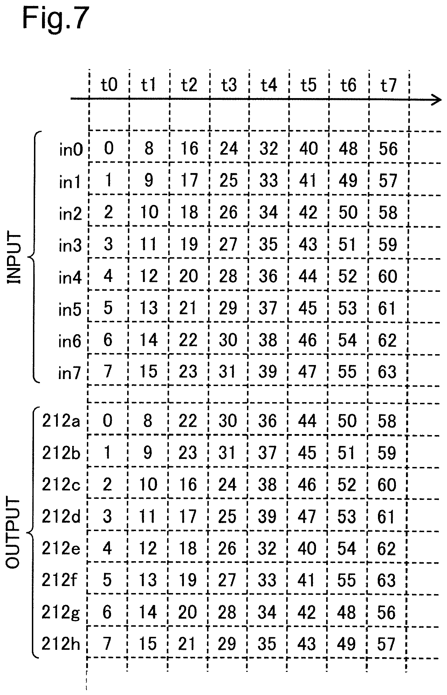

Figs. 7 to 10 are time charts illustrating an operation of the data sorting processing device 20. The data sorting processing device 20 receives, as an input, in eight cycles t0 to t7, sixty-four pieces of data 0 to 63 in 8 parallel in sequential order. Further, the data sorting processing device 20 outputs, in eight cycles t9 to t15, the sixty-four pieces of data 0 to 63 in 8 parallel in bit-reverse order.

(First Data Sorting Unit)

First, details of an operation of the first data sorting unit 21 are described with reference to Figs. 7 to 9. The first data sorting unit 21 inputs, in eight cycles t0 to t7, sixty-four pieces of data 0 to 63 in 8 parallel in sequential order, and outputs, in eight cycles t8 to t15, the sixty-four pieces of data 0 to 63 in 8 parallel in intermediate order.

[First Data Distributing Unit]

Next, an operation of the first data distributing unit 211 is described with reference to Fig. 7. Fig. 7 is a time chart in which an order of data (upper section) to be input from the input terminals in0 to 7 to the first data distributing unit 211, and an order of data (lower section) to be output from the first data distributing unit 211 to the signal lines 212a to h are unified.

In cycles t0 and t1, the first data distributing unit 211 inputs and outputs data as follows.

Specifically, the first data distributing unit 211 outputs, to the signal line 212a, input data from the input terminal in0, and outputs, to the signal line 212b, input data from the input terminal in1. Further, the first data distributing unit 211 outputs, to the signal line 212c, input data from the input terminal in2, and outputs, to the signal line 212d, input data from the input terminal in3. Further, the first data distributing unit 211 outputs, to the signal line 212e, input data from the input terminal in4, and outputs, to the signal line 212f, input data from the input terminal in5. Further, the first data distributing unit 211 outputs, to the signal line 212g, input data from the input terminal in6, and outputs, to the signal line 212h, input data from the input terminal in7.

In cycles t2 and t3, the first data distributing unit 211 inputs and outputs data as follows.

Specifically, the first data distributing unit 211 outputs, to the signal line 212c, input data from the input terminal in0, and outputs, to the signal line 212d, input data from the input terminal in1. Further, the first data distributing unit 211 outputs, to the signal line 212e, input data from the input terminal in2, and outputs, to the signal line 212f, input data from the input terminal in3. Further, the first data distributing unit 211 outputs, to the signal line 212g, input data from the input terminal in4, and outputs, to the signal line 212h, input data from the input terminal in5. Further, the first data distributing unit 211 outputs, to the signal line 212a, input data from the input terminal in6, and outputs, to the signal line 212b, input data from the input terminal in7.

In cycles t4 and t5, the first data distributing unit 211 inputs and outputs data as follows.

Specifically, the first data distributing unit 211 outputs, to the signal line 212e, input data from the input terminal in0, and outputs, to the signal line 212f, input data from the input terminal in1. Further, the first data distributing unit 211 outputs, to the signal line 212g, input data from the input terminal in2, and outputs, to the signal line 212h, input data from the input terminal in3. Further, the first data distributing unit 211 outputs, to the signal line 212a, input data from the input terminal in4, and outputs, to the signal line 212b, input data from the input terminal in5. Further, the first data distributing unit 211 outputs, to the signal line 212c, input data from the input terminal in6, and outputs, to the signal line 212d, input data from the input terminal in7.

In cycles t6 and t7, the first data distributing unit 211 inputs and outputs data as follows.

Specifically, the first data distributing unit 211 outputs, to the signal line 212g, input data from the input terminal in0, and outputs, to the signal line 212h, input data from the input terminal in1. Further, the first data distributing unit 211 outputs, to the signal line 212a, input data from the input terminal in2, and outputs, to the signal line 212b, input data from the input terminal in3. Further, the first data distributing unit 211 outputs, to the signal line 212c, input data from the input terminal in4, and outputs, to the signal line 212d, input data from the input terminal in5. Further, the first data distributing unit 211 outputs, to the signal line 212e, input data from the input terminal in6, and outputs, to the signal line 212f, input data from the input terminal in7.

Herein, an order of data to be input and output by the first data distributing unit 211 in each cycle is described with reference to Fig. 7. Fig. 7 is a time chart in which an order of data (upper section) to be input from the input terminals in0 to 7 to the first data distributing unit 211, and an order of data (lower section) to be output from the first data distributing unit 211 to the signal lines 212a to h are unified.

First, in cycle t0, the first data distributing unit 211 receives. as an input, pieces of data 0 to 7 from the input terminals in0 to 7, respectively. The first data distributing unit 211 distributes and outputs the pieces of data 0 to 7 to the signal lines 212a to h, respectively.

Next, in cycle t1, the first data distributing unit 211 receives, as an input, pieces of data 8 to 15 from the input terminals in0 to 7, respectively. The first data distributing unit 211 distributes and outputs the pieces of data 8 to 15 to the signal lines 212a to h, respectively.

Next, in cyclc t2, the first data distributing unit 211 receives, as an input, pieces of data 16 to 23 from the input terminals in0 to 7, respectively. The first data distributing unit 211 distributes and outputs the pieces of data 22, 23, and 16 to 21 to the signal lines 212a to h, respectively.

Next, in cycle t3, the first data distributing unit 211 receives, as an input, pieces of data 24 to 31 from the input terminals in0 to 7, respectively. The first data distributing unit 211 distributes and outputs the pieces of data 30, 31, and 24 to 29 to the signal lines 212a to h, respectively.

Next, in cycle t4, the first data distributing unit 211 receives, as an input, pieces of data 32 to 39 from the input terminals in0 to 7, respectively. The first data distributing unit 211 distributes and outputs the eight pieces of data 36 to 39, and 32 to 35 to the signal lines 212a to h, respectively.

Next, in cycle t5, the first data distributing unit 211 receives, as an input, pieces of data 40 to 47 from the input terminals in0 to 7, respectively. The first data distributing unit 211 distributes and outputs the pieces of data 44 to 47, and 40 to 43 to the signal lines 212a to h, respectively.

Next, in cycle t6, the first data distributing unit 211 receives, as an input, pieces of data 48 to 55 from the input terminals in0 to 7, respectively. The first data distributing unit 211 distributes and outputs the pieces of data 50 to 55, 48, and 49 to the signal lines 212a to h, respectively.

Further, in cycle t7, the first data distributing unit 211 receives, as an input, pieces of data 56 to 63 from the input terminals in0 to 7, respectively. The first data distributing unit 211 distributes and outputs the pieces of data 58 to 63, 56, and 57 to the signal lines 212a to h, respectively.

As described above, the first data distributing unit 211 performs rotation processing with respect to eight pieces of data to be simultaneously input in parallel, and outputs. For example, the first data distributing unit 211 can be achieved by a shift circuit. In other words, the first data distributing unit 211 receives, as an input, a plurality of pieces of data from different input terminals. And then, the first data distributing unit 211 distributes and outputs the plurality of pieces of input data in accordance with a first rule to be set for each two cycles. The first rule is a rule that a plurality of pieces of data are sorted as illustrated in Fig. 7 by using a data set as a unit.

[RAM Circuit]

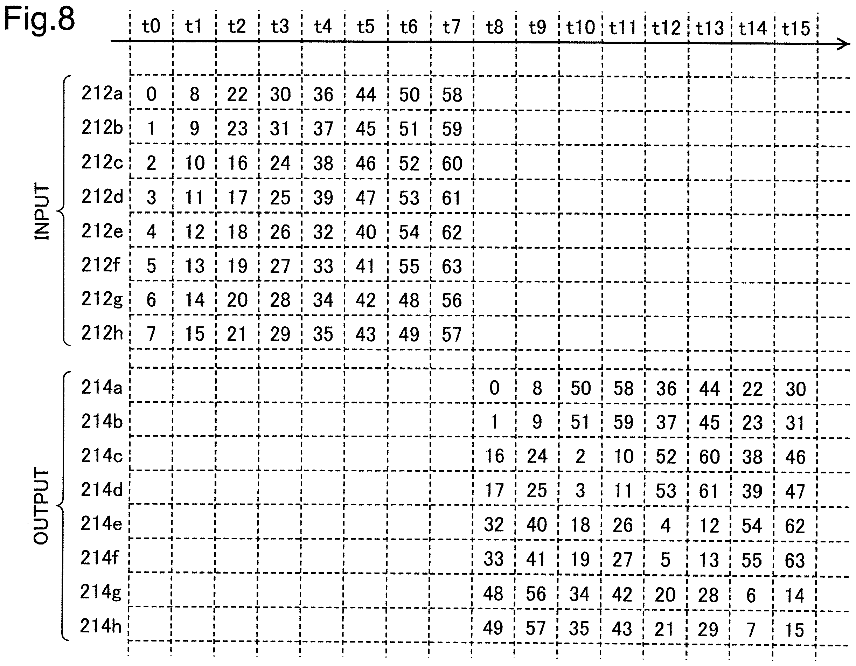

Next, an operation of each of the RAM circuit 213a, the RAM circuit 213b, the RAM circuit 213c, and the RAM circuit 213d included in the RAM circuit 213 is described with reference to Fig. 8. Fig. 8 is a time chart in which an order of data (upper section) to be input from the signal lines 212a to h to the RAM circuit 213, and an order of data (lower section) to be output from the RAM circuit 213 to the signal lines 214a to h are unified.

[RAM Circuit a]

The RAM circuit 213a outputs, to the signal line 214a in cycle t8, a piece of data 0 input from the signal line 212a in cycle t0, and outputs, to the signal line 214b in cycle t8, a piece of data 1 input from the signal line 212b in cycle t0. Further, the RAM circuit 213a outputs, to the signal line 214a in cycle t9, a piece of data 8 input from the signal line 212a in cycle t1, and outputs, to the signal line 214b in cycle t9, a piece of data 9 input from the signal line 212b in cycle t1.

The RAM circuit 213a outputs, to the signal line 214a in cycle t14, a piece of data 22 input from the signal line 212a in cycle t2, and outputs, to the signal line 214b in cycle t14, a piece of data 23 input from the signal line 212b in cycle t2. Further, the RAM circuit 213a outputs, to the signal line 214a in cycle t15, a piece of data 30 input from the signal line 212a in cycle t3, and outputs, to the signal line 214b in cycle t14, a piece of data 31 input from the signal line 212b in cycle t3.

The RAM circuit 213a outputs, to the signal line 214a in cycle t12, a piece of data 36 input from the signal line 212a in cycle t4, and outputs, to the signal line 214b in cycle t12, a piece of data 37 input from the signal line 212b in cycle t4. Further, the RAM circuit 213a outputs, to the signal line 214a in cycle t13, a piece of data 44 input from the signal line 212a in cycle t5, and outputs, to the signal line 214b in cycle t13, a piece of data 45 input from the signal line 212b in cycle t5.

The RAM circuit 213a outputs, to the signal line 214a in cycle t10, a piece of data 50 input from the signal line 212a in cycle t6, and outputs, to the signal line 214b in cycle t10, a piece of data 51 input from the signal line 212b in cycle t6. Further, the RAM circuit 213a outputs, to the signal line 214a in cycle t11, a piece of data 58 input from the signal line 212a in cycle t7, and outputs, to the signal line 214b in cycle t11, a piece of data 59 input from the signal line 212b in cycle t7.

[RAM Circuit b]

The RAM circuit 213b outputs, to the signal line 214c in cycle t10, a piece of data 2 input from the signal line 212c in cycle t0, and outputs, to the signal line 214d in cycle t10, a piece of data 3 input from the signal line 212d in cycle t0. Further, the RAM circuit 213b outputs, to the signal line 214c in cycle t11, a piece of data 10 input from the signal line 212c in cycle t1, and outputs, to the signal line 214d in cycle t11, a piece of data 11 input from the signal line 212d in cycle t1.

The RAM circuit 213b outputs, to the signal line 214c in cycle t8, a piece of data 16 input from the signal line 212c in cycle t2, and outputs, to the signal line 214d in cycle t8, a piece of data 17 input from the signal line 212d in cycle t2. Further, the RAM circuit 213b outputs, to the signal line 214c in cycle t9, a piece of data 24 input from the signal line 212c in cycle t3, and outputs, to the signal line 214d in cycle t9, a piece of data 25 input from the signal line 212d in cycle t3.

The RAM circuit 213b outputs, to the signal line 214c in cycle t14, a piece of data 38 input from the signal line 212c in cycle t4, and outputs, to the signal line 214d in cycle t14, a piece of data 39 input from the signal line 212d in cycle t4. Further, the RAM circuit 213b outputs, to the signal line 214c in cycle t15, a piece of data 46 input from the signal line 212c in cycle t5, and outputs, to the signal line 214d in cycle t15, a piece of data 47 input from the signal line 212d in cycle t5.

The RAM circuit 213b outputs, to the signal line 214c in cycle t12, a piece of data 52 input from the signal line 212c in cycle t6, and outputs, to the signal line 214d in cycle t12, a piece of data 53 input from the signal line 212d in cycle t6. Further, the RAM circuit 213b outputs, to the signal line 214c in cycle t13, a piece of data 60 input from the signal line 212c in cycle t7, and outputs, to the signal line 214d in cycle t13, a piece of data 61 input from the signal line 212d in cycle t7.

[RAM Circuit c]

The RAM circuit 213c outputs, to the signal line 214e in cycle t12, a piece of data 4 input from the signal line 212e in cycle t0, and outputs, to the signal line 214f in cycle t12, a piece of data 5 input from the signal line 212f in cycle t0. Further, the RAM circuit 213c outputs, to the signal line 214e in cycle t13, a piece of data 12 input from the signal line 212e in cycle t1, and outputs, to the signal line 214f in cycle t13, a piece of data 13 input from the signal line 212f in cycle t1.

The RAM circuit 213c outputs, to the signal line 214e in cycle t10, a piece of data 18 input from the signal line 212e in cycle t2, and outputs, to the signal line 214f in cycle t10, a piece of data 19 input from the signal line 212f in cycle t2. Further, the RAM circuit 213c outputs, to the signal line 214e in cycle t11, a piece of data 26 input from the signal line 212e in cycle t3, and outputs, to the signal line 214f in cycle t11, a piece of data 27 input from the signal line 212f in cycle t3.

The RAM circuit 213c outputs, to the signal line 214e in cycle t8, a piece of data 32 input from the signal line 212e in cycle t4, and outputs, to the signal line 214f in cycle t8, a piece of data 33 input from the signal line 212f in cycle t4. The RAM circuit 213c outputs, to the signal line 214e in cycle t9, a piece of data 40 input from the signal line 212e in cycle t5, and outputs, to the signal line 214f in cycle t9, a piece of data 41 input from the signal line 212f in cycle t5.

The RAM circuit 213c outputs, to the signal line 214e in cycle t14, a piece of data 54 input from the signal line 212e in cycle t6, and outputs, to the signal line 214f in cycle t14, a piece of data 55 input from the signal line 212f in cycle t6. Further, the RAM circuit 213c outputs, to the signal line 214e in cycle t15, a piece of data 62 input from the signal line 212e in cycle t7, and outputs, to the signal line 214f in cycle t15, a piece of data 63 input from the signal line 212f in cycle t7.

[RAM Circuit d]

The RAM circuit 213d outputs, to the signal line 214g in cycle t14, a piece of data 6 input from the signal line 212g in cycle t0, and outputs, to the signal line 214h in cycle t14, a piece of data 7 input from the signal line 212h in cycle t0. Further, the RAM circuit 213d outputs, to the signal line 214g in cycle t15, a piece of data 14 input from the signal line 212g in cycle t1, and outputs, to the signal line 214h in cycle t15, a piece of data 15 input from the signal line 212h in cycle t1.

The RAM circuit 213d outputs, to the signal line 214g in cycle t12, a piece of data 20 input from the signal line 212g in cycle t2, and outputs, to the signal line 214h in cycle t12, a piece of data 21 input from the signal line 212h in cycle t2. Further, the RAM circuit 213d outputs, to the signal line 214g in cycle t13, a piece of data 28 input from the signal line 212g in cycle t3, and outputs, to the signal line 214h in cycle t13, a piece of data 29 input from the signal line 212h in cycle t3.

The RAM circuit 213d outputs, to the signal line 214g in cycle t10, a piece of data 34 input from the signal line 212g in cycle t4, and outputs, to the signal line 214h in cycle t10, a piece of data 35 input from the signal line 212h in cycle t4. Further, the RAM circuit 213d outputs, to the signal line 214g in cycle t11, a piece of data 42 input from the signal line 212g in cycle t5, and outputs, to the signal line 214h in cycle t11, a piece of data 43 input from the signal line 212h in cycle t5.

The RAM circuit 213d outputs, to the signal line 214g in cycle t8, a piece of data 48 input from the signal line 212g in cycle t6, and outputs, to the signal line 214h in cycle t8, a piece of data 49 input from the signal line 212h in cycle t6. Further, the RAM circuit 213d outputs, to the signal line 214g in cycle t9, a piece of data 56 input from the signal line 212g in cycle t7, and outputs, to the signal line 214h in cycle t9, a piece of data 57 input from the signal line 212h in cycle t7.

As described above, the RAM circuit 213 sorts a plurality of pieces of data by using, as a unit, a data set constituted of four pieces of data to be input from two input terminals adjacent to each other in two consecutive cycles. In other words, the RAM circuit 213 stores, in the unit of a data set, a plurality of pieces of data output by the first data distributing unit 211. And then, the RAM circuit 213 sorts and outputs the plurality of pieces of stored data in the unit of a data set.

[Second Data Distributing Unit]

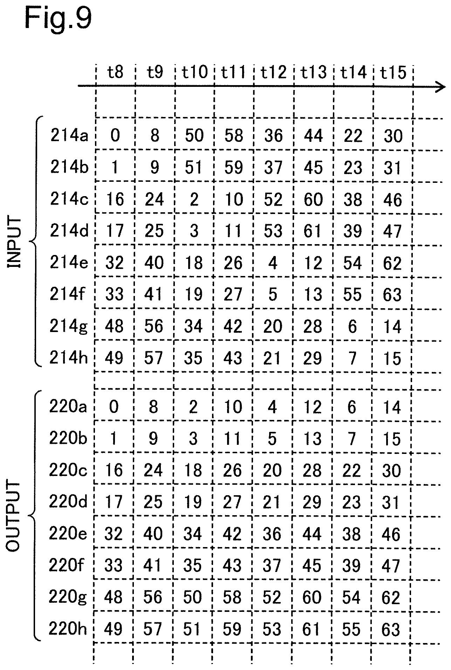

Next, an operation of the second data distributing unit 215 is described with reference to Fig. 9. Fig. 9 is a time chart in which an order of data (upper section) to be input from the signal lines 214a to h to the second data distributing unit 215, and an order of data (lower section) to be output from the second data distributing unit 215 to the signal lines 220a to h are unified.

In cycles t8 and t9, the second data distributing unit 215 inputs and outputs data as follows.

Specifically, the second data distributing unit 215 outputs, to the signal line 220a, input data from the signal line 214a, and outputs, to the signal line 220b, input data from the signal line 214b. Further, the second data distributing unit 215 outputs, to the signal line 220c, input data from the signal line 214c, and outputs, to the signal line 220d, input data from the signal line 214d. Further, the second data distributing unit 215 outputs, to the signal line 220e, input data from the signal line 214e, and outputs, to the signal line 220f, input data from the signal line 214f. Further, the second data distributing unit 215 outputs, to the signal line 220g, input data from the signal line 214g, and outputs, to the signal line 220h, input data from the signal line 214h.

In cycles t10 and t11, the second data distributing unit 215 inputs and outputs data as follows.

Specifically, the second data distributing unit 215 outputs, to the signal line 220g, input data from the signal line 214a, and outputs, to the signal line 220h, input data from the signal line 214b. Further, the second data distributing unit 215 outputs, to the signal line 220a, input data from the signal line 214c, and outputs, to the signal line 220b, input data from the signal line 214d. Further, the second data distributing unit 215 outputs, to the signal line 220c, input data from the signal line 214e, and outputs, to the signal line 220d, input data from the signal line 214f. Further, the second data distributing unit 215 outputs, to the signal line 220e, input data from the signal line 214g, and outputs, to the signal line 220f, input data from the signal line 214h.

In cycles t12 and t13, the second data distributing unit 215 inputs and outputs data as follows.

Specifically, the second data distributing unit 215 outputs, to the signal line 220e, input data from the signal line 214a, and outputs, to the signal line 220f, input data from the signal line 214b. Further, the second data distributing unit 215 outputs, to the signal line 220g, input data from the signal line 214c, and outputs, to the signal line 220h, input data from the signal line 214d. Further, the second data distributing unit 215 outputs, to the signal line 220a, input data from the signal line 214e, and outputs, to the signal line 220b, input data from the signal line 214f. Further, the second data distributing unit 215 outputs, to the signal line 220c, input data from the signal line 214g, and outputs, to the signal line 220d, input data from the signal line 214h.

In cycles t14 and t15, the second data distributing unit 215 inputs and outputs data as follows.

Specifically, the second data distributing unit 215 outputs, to the signal line 220c, input data from the signal line 214a, and outputs, to the signal line 220d, input data from the signal line 214b. Further, the second data distributing unit 215 outputs, to the signal line 220e, input data from the signal line 214c, and outputs, to the signal line 220f, input data from the signal line 214d. Further, the second data distributing unit 215 outputs, to the signal line 220g, input data from the signal line 214e, and outputs, to the signal line 220h, input data from the signal line 214f. The second data distributing unit 215 outputs, to the signal line 220a, input data from the signal line 214g, and outputs, to the signal line 220b, input data from the signal line 214h.

Specifically, the second data distributing unit 215 inputs and outputs data in the following order in each cycle.

First, in cycle t8, the second data distributing unit 215 receives, as an input, eight pieces of data, namely, a piece of data 0, a piece of data 1, a piece of data 16, a piece of data 17, a piece of data 32, a piece of data 33, a piece of data 48, and a piece of data 49 from the signal lines 214a to h. Further, in cycle t8, the second data distributing unit 215 respectively outputs, to the signal lines 220a to h, the eight pieces of data, namely, the piece of data 0, the piece of data 1, the piece of data 16, the piece of data 17, the piece of data 32, the piece of data 33, the piece of data 48, and the piece of data 49.

Next, in cycle t9, the second data distributing unit 215 receives, as an input, eight pieces of data, namely, a piece of data 8, a piece of data 9, a piece of data 24, a piece of data 25, a piece of data 40, a piece of data 41, a piece of data 56, and a piece of data 57 from the signal lines 214a to h. Further, in cycle t9, the second data distributing unit 215 respectively outputs, to the signal lines 220a to h, the eight pieces of data, namely, the piece of data 8, the piece of data 9, the piece of data 24, the piece of data 25, the piece of data 40, the piece of data 41, the piece of data 56, and the piece of data 57.

Next, in cycle t10, the second data distributing unit 215 receives, as an input, eight pieces of data, namely, a piece of data 50, a piece of data 51, a piece of data 2, a piece of data 3, a piece of data 18, a piece of data 19, a piece of data 34, and a piece of data 35 from the signal lines 214a to h. Further, in cycle t10, the second data distributing unit 215 respectively outputs, to the signal lines 220a to h, the eight pieces of data, namely, the piece of data 2, the piece of data 3, the piece of data 18, the piece of data 19, the piece of data 34, the piece of data 35, the piece of data 50, and the piece of data 51.

Next, in cycle t11, the second data distributing unit 215 receives, as an input, eight pieces of data, namely, a piece of data 58, a piece of data 59, a piece of data 10, a piece of data 11, a piece of data 26, a piece of data 27, a piece of data 42, and a piece of data 43 from the signal lines 214a to h. Further, in cycle t11, the second data distributing unit 215 respectively outputs, to the signal lines 220a to h, the eight pieces of data, namely, the piece of data 10, the piece of data 11, the piece of data 26, the piece of data 27, the piece of data 42, the piece of data 43, the piece of data 58, and the piece of data 59.

Next, in cycle t12, the second data distributing unit 215 receives, as an input, eight pieces of data, namely, a piece of data 36, a piece of data 37, a piece of data 52, a piece of data 53, a piece of data 4, a piece of data 5, a piece of data 20, and a piece of data 21 from the signal lines 214a to h. Further, in cycle t12, the second data distributing unit 215 respectively outputs, to the signal lines 220a to h, the eight pieces of data, namely, the piece of data 4, the piece of data 5, the piece of data 20, the piece of data 21, the piece of data 36, the piece of data 37, the piece of data 52, and the piece of data 53.

Next, in cycle t13, the second data distributing unit 215 receives, as an input, eight pieces of data, namely, a piece of data 44, a piece of data 45, a piece of data 60, a piece of data 61, a piece of data 12, a piece of data 13, a piece of data 28, and a piece of data 29 from the signal lines 214a to h. Further, in cycle t13, the second data distributing unit 215 respectively outputs, to the signal lines 220a to h, the eight pieces of data, namely, the piece of data 12, the piece of data 13, the piece of data 28, the piece of data 29, the piece of data 44, the piece of data 45, the piece of data 60, and the piece of data 61.

Next, in cycle t14, the second data distributing unit 215 receives, as an input, eight pieces of data, namely, a piece of data 22, a piece of data 23, a piece of data 38, a piece of data 39, a piece of data 54, a piece of data 55, a piece of data 6, and a piece of data 7 from the signal lines 214a to h. Further, in cycle t14, the second data distributing unit 215 respectively outputs, to the signal lines 220a to h, the eight pieces of data, namely, the piece of data 6, the piece of data 7, the piece of data 22, the piece of data 23, the piece of data 38, the piece of data 39, the piece of data 54, and the piece of data 55.

Further, in cycle t15, the second data distributing unit 215 receives, as an input, eight pieces of data, namely, a piece of data 30, a piece of data 31, a piece of data 46, a piece of data 47, a piece of data 62, a piece of data 63, a piece of data 14, and a piece of data 15 from the signal lines 214a to h. Further, in cycle t5, the second data distributing unit 215 respectively outputs, to the signal lines 220a to h, the eight pieces of data, namely, the piece of data 14, the piece of data 15, the piece of data 30, the piece of data 31, the piece of data 46, the piece of data 47, the piece of data 62, and the piece of data 63.

As described above, the second data distributing unit 215 performs rotation processing with respect to eight pieces of data to be simultaneously input in parallel, and outputs. For example, the second data distributing unit 215 can be achieved by a shift circuit. In other words, the second data distributing unit 215 distributes, into intermediate order, a plurality of pieces of data to be output from the RAM circuit 213 in accordance with a second rule to be set for each two cycles. The second rule is a rule that a plurality of pieces of data are sorted within a data set as illustrated in Fig. 9. Data to be output from the second data distributing unit 215 are set as an output of the first data sorting unit 21, and are input to the second data sorting unit 22 via the signal lines 220a to h.

Specifically, the first data sorting unit 21 divides a plurality of pieces of data into a plurality of cycles, and receives, as an input, at least two pieces of data each from a different input terminal. And then, the first data sorting unit 21 sorts the plurality of pieces of data into intermediate order by using, as a unit, a data set constituted of at least two pieces of data to be input from input terminals adjacent to each other in at least two consecutive cycles.

More specifically, in the present example embodiment, the first data sorting unit 21 divides sixty-four pieces of data into eight cycles, and receives, as an input, eight pieces of data each from a different input terminal. Further, the first data sorting unit 21 sorts the plurality of pieces of data into intermediate order by using, as a unit, a data set constituted of four pieces of data. Note that, in the present example embodiment, a data set is constituted of four pieces of data, namely, two pieces of data to be input in an odd-numbered cycle, and two pieces of data to be input in an even-numbered cycle consecutive to the odd-numbered cycle.

[Second Data Sorting Unit]

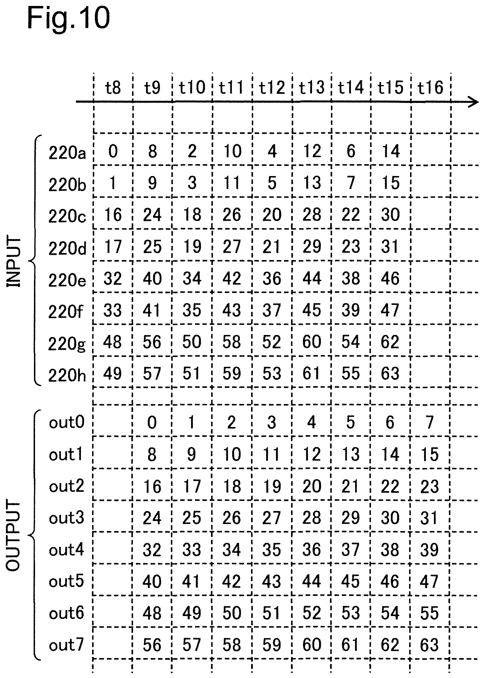

Next, details of an operation of the second data sorting unit 22 are described with reference to Fig. 10. The second data sorting unit 22 receives as an input, in eight cycles t8 to t15, sixty-four pieces of data 0 to 63 in 8 parallel from the signal lines 220a to h in intermediate order. The second data sorting unit 22 outputs, in eight cycles t9 to t16, the sixty-four pieces of data 0 to 63 in 8 parallel in bit-reverse order.

Fig. 10 is a time chart in which an order of data (upper section) to be input from the signal lines 220a to h to the second data distributing unit 22, and an order of data (lower section) to be output from the second data distributing unit 22 to the output terminals out0 to 7 are unified. In the following, an operation of each of an intra-data-set sorting unit 221a, an intra-data-set sorting unit 221b, an intra-data-set sorting unit 221c, and an intra-data-set sorting unit 221d included in the second data sorting unit 22 is described.

[Intra-data-set Sorting Unit 221a]

The intra-data-set sorting unit 221a, in cycle t8, inputs a piece of data 0 from the signal line 220a, and inputs a piece of data 1 from the signal line 220b, and, in cycle t9, inputs a piece of data 8 from the signal line 220a, and inputs a piece of data 9 from the signal line 220b. Further, the intra-data-set sorting unit 221a, in cycle t9, outputs the piece of data 0 to the output terminal out0, and outputs the piece of data 8 to the output terminal out1, and, in cycle t10, outputs 1 to the output terminal out0, and outputs the piece of data 9 to the output terminal out1.

The intra-data-set sorting unit 221a, in cycle t10, inputs a piece of data 2 from the signal line 220a, and inputs a piece of data 3 from the signal line 220b, and, in cycle t11, inputs a piece of data 10 from the signal line 220a, and inputs a piece of data 11 from the signal line 220b. Further, the intra-data-set sorting unit 221a, in cycle t11, outputs the piece of data 2 to the output terminal out0, and outputs the piece of data 10 to the output terminal out1, and, in cycle t12, outputs the piece of data 3 to the output terminal out0, and outputs the piece of data 11 to the output terminal out1.

The intra-data-set sorting unit 221a, in cycle t12, inputs a piece of data 4 from the signal line 220a, and inputs a piece of data 5 from the signal line 220b, and, in cycle t13, inputs a piece of data 12 from the signal line 220a and inputs a piece of data 13 from the signal line 220b. Further, the intra-data-set sorting unit 221a, in cycle t13, outputs the piece of data 4 to the output terminal out0, and outputs the piece of data 12 to the output terminal out1, and, in cycle t14, outputs the piece of data 5 to the output terminal out0, and outputs the piece of data 13 to the output terminal out1.

The intra-data-set sorting unit 221a, in cycle t14, inputs a piece of data 6 from the signal line 220a, and inputs a piece of data 7 from the signal line 220b, and, in cycle t15, inputs a piece of data 14 from the signal line 220a, and inputs a piece of data 15 from the signal line 220b. Further, the intra-data-set sorting unit 221a, in cycle t15, outputs the piece of data 6 to the output terminal out0, and outputs the piece of data 14 to the output terminal out1, and, in cycle t16, outputs the piece of data 7 to the output terminal out0, and outputs the piece of data 15 to the output terminal out1.

[Intra-data-set Sorting unit 221b]

The intra-data-set sorting unit 221b, in cycle t8, inputs a piece of data 16 from the signal line 220c, and inputs a piece of data 17 from the signal line 220d, and, in cycle t9, inputs a piece of data 24 from the signal line 220c, and inputs a piece of data 25 from the signal line 220d. Further, the intra-data-set sorting unit 221b, in cycle t9, outputs the piece of data 16 to the output terminal out2, and outputs the piece of data 24 to the output terminal out3, and, in cycle t10, outputs 17 to the output terminal out2, and outputs the piece of data 25 to the output terminal out3.

The intra-data-set sorting unit 221b, in cycle t10, inputs a piece of data 18 from the signal line 220c, and inputs a piece of data 19 from the signal line 220d, and, in cycle t11, inputs a piece of data 26 from the signal line 220c, and inputs a piece of data 27 from the signal line 220d. Further, the intra-data-set sorting unit 221b, in cycle t11, outputs the piece of data 18 to the output terminal out2, and outputs the piece of data 26 to the output terminal out3, and, in cycle t12, outputs 19 to the output terminal out2, and outputs the piece of data 27 to the output terminal out3.

The intra-data-set sorting unit 221b, in cycle t12, inputs a piece of data 20 from the signal line 220c, and inputs a piece of data 21 from the signal line 220d, and, in cycle t13, inputs a piece of data 28 from the signal line 220c, and inputs a piece of data 29 from the signal line 220d. Further, the intra-data-set sorting unit 221b, in cycle t13, outputs the piece of data 20 to the output terminal out2, and outputs the piece of data 28 to the output terminal out3, and, in cycle t14, outputs 21 to the output terminal out2, and outputs the piece of data 29 to the output terminal out3.

The intra-data-set sorting unit 221b, in cycle t14, inputs a piece of data 22 from the signal line 220c, and inputs a piece of data 23 from the signal line 220d, and, in cycle t15, inputs a piece of data 30 from the signal line 220c, and inputs a piece of data 31 from the signal line 220d. Further, the intra-data-set sorting unit 221b, in cycle t15, outputs the piece of data 22 to the output terminal out2, and outputs the piece of data 30 to the output terminal out3, and, in cycle t16, outputs 23 to the output terminal out2, and outputs the piece of data 31 to the output terminal out3.

[Intra-data-set Sorting Unit 221c]

The intra-data-set sorting unit 221c, in cycle t8, inputs a piece of data 32 from the signal line 220e, and inputs a piece of data 33 from the signal line 220f, and, in cycle t9, inputs a piece of data 40 from the signal line 220e, and inputs a piece of data 41 from the signal line 220f. Further, the intra-data-set sorting unit 221c, in cycle t9, outputs the piece of data 32 to the output terminal out4, and outputs the piece of data 40 to the output terminal out5, and, in cycle t10, outputs 33 to the output terminal out4, and outputs the piece of data 41 to the output terminal out5.

The intra-data-set sorting unit 221c, in cycle t10, inputs a piece of data 34 from the signal line 220e, and inputs a piece of data 35 from the signal line 220f, and, in cycle t11, inputs a piece of data 42 from the signal line 220e, and inputs a piece of data 43 from the signal line 220f. Further, the intra-data-set sorting unit 221c, in cycle t11, outputs the piece of data 34 to the output terminal out4, and outputs the piece of data 42 to the output terminal out5, and, in cycle t12, outputs 35 to the output terminal out4, and outputs the piece of data 43 to the output terminal out5.

The intra-data-set sorting unit 221c, in cycle t12, inputs a piece of data 36 from the signal line 220e, and inputs a piece of data 37 from the signal line 220f, and, in cycle t13, inputs a piece of data 44 from the signal line 220e, and inputs a piece of data 45 from the signal line 220f. Further, the intra-data-set sorting unit 221c, in cycle t13, outputs the piece of data 36 to the output terminal out4, and outputs the piece of data 44 to the output terminal out5, and, in cycle t14, outputs 37 to the output terminal out4, and outputs the piece of data 45 to the output terminal out5.

The intra-data-set sorting unit 221c, in cycle t14, inputs a piece of data 38 from the signal line 220e, and inputs a piece of data 39 from the signal line 220f, and, in cycle t15, inputs a piece of data 46 from the signal line 220e, and inputs a piece of data 47 from the signal line 220f. Further, the intra-data-set sorting unit 221c, in cycle t15, outputs the piece of data 38 to the output terminal out4, and outputs the piece of data 46 to the output terminal out5, and, in cycle t16, outputs 39 to the output terminal out4, and outputs the piece of data 47 to the output terminal out5.

[Intra-data-set Sorting Unit 221d]

The intra-data-set sorting unit 221d, in cycle t8, inputs a piece of data 48 from the signal line 220g, and inputs a piece of data 49 from the signal line 220h, and, in cycle t9, inputs a piece of data 56 from the signal line 220g, and inputs a piece of data 57 from the signal line 220h. Further, the intra-data-set sorting unit 221d, in cycle t9, outputs the piece of data 48 to the output terminal out6, and outputs the piece of data 56 to the output terminal out7, and, in cycle t10, outputs 49 to the output terminal out6, and outputs the piece of data 57 to the output terminal out7.

The intra-data-set sorting unit 221d, in cycle t10, inputs a piece of data 50 from the signal line 220g, and inputs a piece of data 51 from the signal line 220h, and, in cycle t11, inputs a piece of data 58 from the signal line 220g, and inputs a piece of data 59 from the signal line 220h. Further, the intra-data-set sorting unit 221d, in cycle t11, outputs the piece of data 50 to the output terminal out6, and outputs the piece of data 58 to the output terminal out7, and, in cycle t12, outputs 51 to the output terminal out6, and outputs the piece of data 59 to the output terminal out7.

The intra-data-set sorting unit 221d, in cycle t12, inputs a piece of data 52 from the signal line 220g, and inputs a piece of data 53 from the signal line 220h, and, in cycle t13, inputs a piece of data 60 from the signal line 220g, and inputs a piece of data 61 from the signal line 220h. Further, the intra-data-set sorting unit 221d, in cycle t13, outputs the piece of data 52 to the output terminal out6, and outputs the piece of data 60 to the output terminal out7, and, in cycle t14, outputs 53 to the output terminal out6, and outputs the piece of data 61 to the output terminal out7.

The intra-data-set sorting unit 221d, in cycle t14, inputs a piece of data 54 from the signal line 220g, and inputs a piece of data 55 from the signal line 220h, and, in cycle t15, inputs a piece of data 62 from the signal line 220g, and inputs a piece of data 63 from the signal line 220h. Further, the intra-data-set sorting unit 221d, in cycle t15, outputs the piece of data 54 to the output terminal out6, and outputs the piece of data 62 to the output terminal out7, and, in cycle t16, outputs 55 to the output terminal out6, and outputs the piece of data 63 to the output terminal out7.

Specifically, the second data sorting unit 22 sorts a plurality of pieces of data sorted into intermediate order by the first data sorting unit 21 into the second order by sorting at least two pieces of data among pieces of data constituting a data set. More specifically, in the present example embodiment, the second data sorting unit 22 sorts a plurality of pieces of data sorted into intermediate order by the first data sorting unit 21 into the second order by sorting two pieces of data among four pieces of data constituting a data set.

As described above, a data sorting processing device according to the present example embodiment is configured in such a way that the first data sorting unit 21 performs sorting from sequential order into intermediate order, and the second data sorting unit 22 performs sorting from intermediate order into bit-reverse order. Specifically, a data sorting processing device according to the present example embodiment is able to reduce a circuit scale, as compared with a general method, since the number of RAM circuits for use in first stage sorting is reduced to one-half in achieving sorting from sequential order into bit-reverse order in two stages.

Note that, in the present example embodiment, data sorting processing from sequential order into bit-reverse order is described. Sorting from bit-reverse order into sequential order is similar to the above. Specifically, the method according to the present example embodiment is also able to perform data sorting processing by a two-stage step of performing, as first stage sorting, sorting from bit-reverse order into intermediate order, and performing, as second stage sorting, sorting from intermediate order into sequential order.

[Related Art]

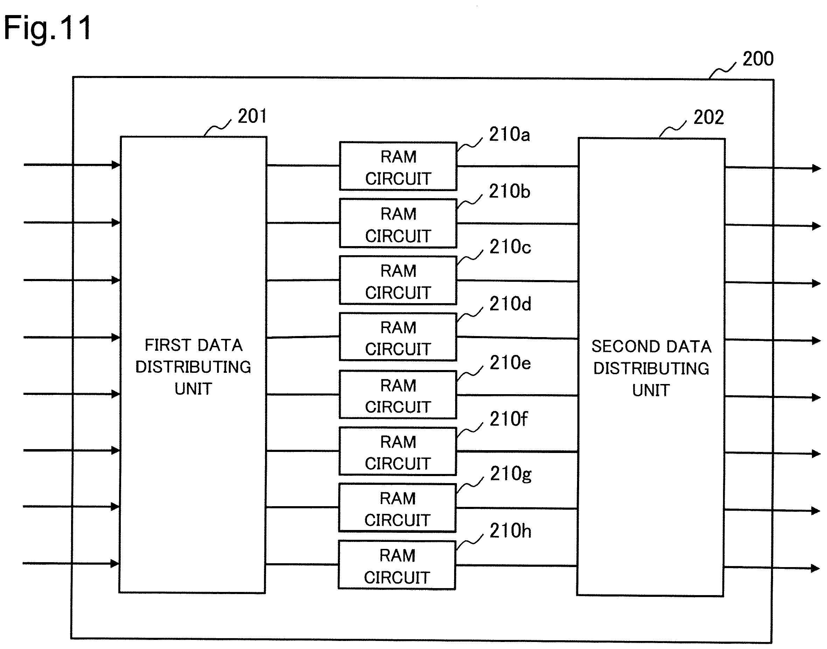

Herein, a related art of a data sorting processing device according to the present example embodiment is described. Fig. 11 illustrates a configuration example of a general data sorting processing device 200 configured by a plurality of RAM circuits. The data sorting processing device 200 includes a first data distributing unit 201, a plurality of RAM circuits 210a to h, and a second data distributing unit 202.

When eight pieces of data are sorted in parallel, it is necessary to output, in each different cycle, eight pieces of data constituting a data set P1 (Fig. 2) to be input in a first cycle. Therefore, as illustrated in Fig. 11, eight RAM circuits 210a to h are necessary to enable setting a data reading cycle individually.

Generally, a RAM circuit is constituted of a memory cell portion for storing data, and a peripheral circuit portion such as an address decoder circuit for performing data writing and reading, and a sensing amplifier circuit Therefore, even when a storage device of a same storage capacity is achieved by a RAM circuit, configuring the storage device by a plurality of RAM circuits increases a circuit scale or electric power consumption by a portion corresponding to a peripheral circuit, as compared with a case that the storage device is configured by a single RAM circuit. Further, as the number of parallel operations of FFT processing or data sorting processing increases, the required number of RAM circuits also increases, and a circuit scale or electric power consumption increases.

On the other hand, a data sorting processing device according to the present example embodiment is able to reduce the number of peripheral circuits of a RAM circuit by reducing the number of RAM circuits of a first data sorting means. Specifically, the present example embodiment is able to reduce a circuit scale of a circuit for performing digital signal processing employing fast Fourier transform.

(Third Example Embodiment)

Next, an intra-data-set sorting device according to a third example embodiment of the present invention is described with reference to the drawings. An intra-data-set sorting device according to the present example embodiment has a configuration for achieving the intra-data-set sorting units 221a to d included in the second data sorting unit 22 according to the second example embodiment.

(Configuration)

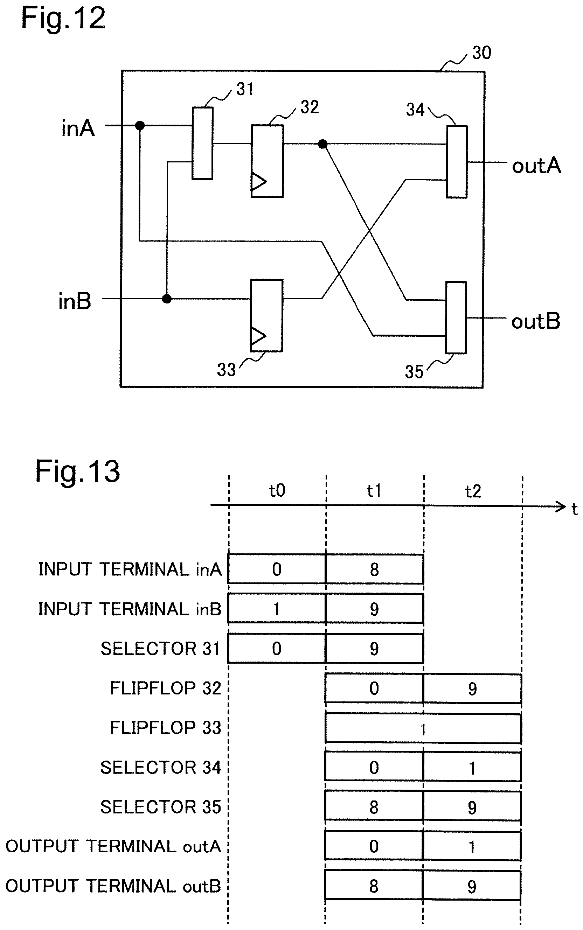

Fig. 12 is a circuit diagram of an intra-data set sorting device 30. The intra-data-set sorting device 30 sorts data input from an input terminal inA and an input terminal inB, and outputs the sorted data from an output terminal outA and an output terminal outB. Note that, the input terminal inA is associated with the input terminal in0, the input terminal in2, the input terminal in4, and the input terminal in6 in Fig. 6. Further, the input terminal inB is associated with the input terminal in1, the input terminal in3, the input terminal in5, and the input terminal in7 in Fig. 6.

As illustrated in Fig. 12, the intra-data-set sorting device 30 includes a selector 31, a flipflop 32, a flipflop 33, a selector 34, and a selector 35. The flipflop 32 and the flipflop 33 are one example of achieving a second storage circuit.

The selector 31 (also referred to as a first selector) receives, as an input, data from the input terminal inA (also referred to as first data), and data from the input terminal inB (also referred to as second data). The selector 31 selects and outputs either of the data input from the input terminal inA and the input terminal inB.

The flipflop 32 (also referred to as a first flipflop) receives, as an input, data from the selector 31, and stores the input data. The flipflop 32 outputs the stored data at a predetermined timing.

The flipflop 33 (also referred to as a second flipflop) receives, as an input, data from the input terminal inB, and stores the input data. The flipflop 33 outputs the stored data at a predetermined timing.

The selector 34 (also referred to as a second selector) receives, as an input, an output of the flipflop 32 and an output of the flipflop 33, and selects either of the input data.

The selector 34 outputs the selected data from the output terminal outA.

The selector 35 (also referred to as a third selector) receives, as an input, an output of the flipflop 32 and data from the input terminal inA, and selects either of the input data. The selector 35 outputs the selected data from the output terminal outB.

(Operation)

Next, an operation of the intra-data-set sorting device 30 is described with reference to a drawing. Fig. 13 is a time chart illustrating an operation of the intra-data-set sorting device 30. Note that, in the following, as illustrated by the example of Fig. 5, an example in which pieces of data 0, 1, 8, and 9 are sorted from intermediate order into bit-reverse order is described.

In Fig. 13, the intra-data-set sorting device 30, in cycle t0 and cycle t1, inputs a data set constituted of four pieces of data 0, 1, 8, and 9 from the input terminal inA and the input terminal inB. The intra-data-set sorting device 30 performs intra-data-set sorting processing with respect to the input data set. Further, the intra-data-set sorting device 30, in cycle t1 and cycle t2, outputs, from the output terminal outA and the output terminal outB, the four pieces of data 0, 8, 1, and 9 sorted within the data set.

Specifically, the intra-data-set sorting device 30 operates as follows.

In cycle t0, the selector 31 receives, as an input, a piece of data 0 from the input terminal inA, and receives, as an input, a piece of data 1 from the input terminal inB. The selector 31 selects the piece of data 0 input from the input terminal inA. The flipflop 32 stores the piece of data 0 selected by the selector 31.

Further, the flipflop 33 stores the piece of data 1 input from the input terminal inB.

In cycle t1, the selector 31 receives, as an input, a piece of data 8 from the input terminal inA, and receives, as an input, a piece of data 9 from the input terminal inB. The selector 31 selects the piece of data 9 input from the input terminal inB. The flipflop 32 outputs the piece of data 0 stored in cycle t0, and stores the piece of data 9 to be input from the input terminal inB. The flipflop 33 outputs the stored piece of data 1. The selector 34 selects the piece of data 0 to be output by the flipflop 32, and outputs to the output terminal outA. Further, the selector 35 selects the piece of data 8 input from the input terminal inA, and outputs to the output terminal outB.

In cycle t2, the flipflop 32 outputs the stored 9. The flipflop 33 outputs the stored 1. The selector 34 selects 1 to be output by the flipflop 33, and outputs to the output terminal outA. The selector 35 selects 9 to be output by the flipflop 32, and outputs to the output terminal outB.

As described above, a data sorting processing device according to the present example embodiment performs data sorting processing by combining a first data sorting means including a RAM circuit, and a second sorting means excluding a RAM circuit. Employing an intra-data-set sorting processing device according to the present example embodiment enables to reduce the number of RAM circuits for use in sorting a plurality of pieces of data from sequential order into bit-reverse order, or sorting from bit-reverse order into sequential order. Specifically, the present example embodiment is able to contribute to, in addition to reduction of a circuit scale of a circuit for performing digital signal processing employing fast Fourier transform, reduction of electric power consumption or miniaturization of a fast Fourier transform device.

(Fourth Example Embodiment)

Next, a fast Fourier transform (FFT) device according to a fourth example embodiment of the present invention is described with reference to the drawings. In the following, a computation device including an FFE device according to the present example embodiment is described.

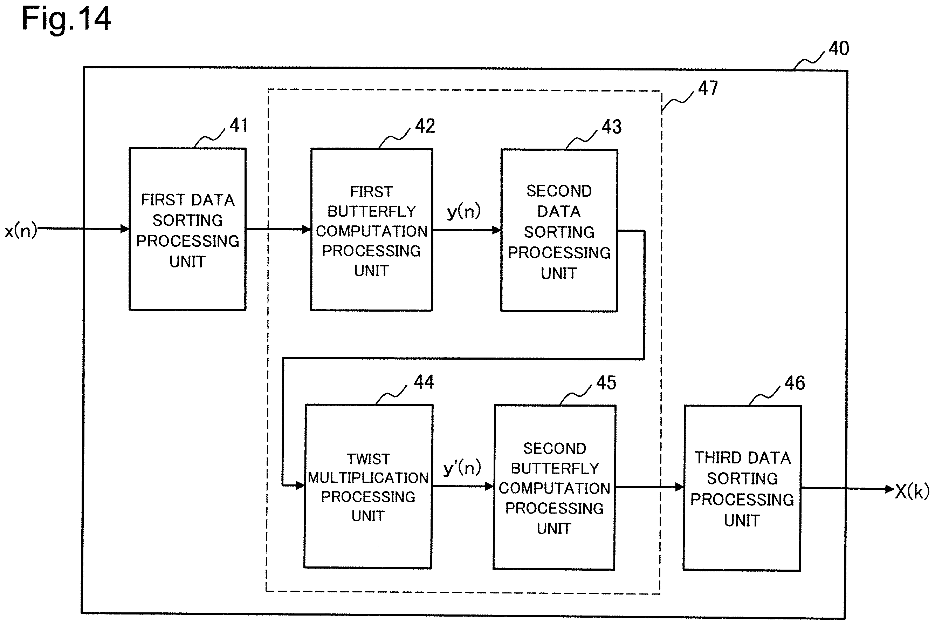

Fig. 14 is a block diagram illustrating a configuration example of a computation device 40 including an FFT device 47 according to the present example embodiment. In Fig. 14, the FFT device 47 includes a first butterfly computation processing unit 42, a second data sorting processing unit 43, a twist multiplication processing unit 44, and a second butterfly computation processing unit 45. The computation device 40 has a configuration in which a first data sorting processing unit 41 and a third data sorting processing unit 46 are added to the FFT device 47. The computation device 40 performs pipeline processing with respect to first data sorting processing, first butterfly computation processing, second data sorting processing, twist multiplication processing, second butterfly computation processing, and third data sorting processing.

Each of the first data sorting processing unit 41, the second data sorting processing unit 43, and the third data sorting processing unit 46 has a function of the data sorting processing device 10 according to the first example embodiment. Specifically, each of the first data sorting processing unit 41, the second data sorting processing unit 43, and the third data sorting processing unit 46 includes a first data sorting unit 11 and a second data sorting unit 12. In the present example embodiment, description is made based on a premise that the first data sorting processing unit 41, the second data sorting processing unit 43, and the third data sorting processing unit 46 have a similar configuration. As far as the second data sorting processing unit 43 has a function of the data sorting processing device 10, the first data sorting processing unit 41 and the third data sorting processing unit 46 do not have to have a function of the data sorting processing device 10. Hereinafter, when the first data sorting processing unit 41, the second data sorting processing unit 43, and the third data sorting processing unit 46 are not distinguished one from another, the first data sorting processing unit 41, the second data sorting processing unit 43, and the third data sorting processing unit 46 may be described as a data sorting processing unit.

The first data sorting processing unit 41 (also referred to as a first data sorting processing means) is a buffer circuit for data sorting. The first data sorting processing unit 41 receives, as an input, input data. The first data sorting processing unit 41 performs data sequence sorting based on a data dependency relationship in terms of algorithm of FFT processing with respect to input data in a prior stage of the first butterfly computation processing unit 42. Specifically, the first data sorting processing unit 41 sorts data from sequential order being an input order of input data into bit-reverse order being an order in which the data are input to the first butterfly computation processing unit 42.

The first butterfly computation processing unit 42 (also referred to as a first butterfly computation processing means) performs first-time butterfly computation processing (first butterfly computation processing) in butterfly computation processing to be performed in two stages. The first butterfly computation processing unit 42 outputs a result of butterfly computation processing in sequential order.

The second data sorting processing unit 43 (also referred to as a second data sorting processing means) is a buffer circuit for data sorting. The second data sorting processing unit 43 performs data sequence sorting based on a data dependency relationship in terms of algorithm of FFT processing in a post stage of the first butterfly computation processing unit 42. The second data sorting processing unit 43 sorts data to be output by the first butterfly computation processing unit 42 in sequential order into bit-reverse order for inputting to the second butterfly computation processing unit 45.

The twist multiplication processing unit 44 (also referred to as a twist multiplication processing means) performs complex rotation on a complex plane in FFT computation after first butterfly computation processing. Note that the twist multiplication processing unit 44 does not perform data sorting.

The second butterfly computation processing unit 45 (also referred to as a second butterfly computation processing means) is a butterfly circuit for performing second-time butterfly processing (second butterfly computation processing) in butterfly computation processing to be performed in two stages. The second butterfly computation processing unit 45 performs second butterfly computation processing with respect to data to be input in bit-reverse order after twist multiplication processing, and outputs a result of processing in bit-reverse order.

The third data sorting processing unit 46 (also referred to as a third data sorting processing means) is a buffer circuit for data sorting. The third data sorting processing unit 46 performs data sequence sorting based on a data dependency relationship in terms of algorithm of FFT processing in a post stage of the second butterfly computation processing unit 45. The third data sorting processing unit 46 sorts data to be output by the second butterfly computation processing unit 45 in bit-reverse order into sequential order. The third data sorting processing unit 46 outputs the sorted data as output data.

The foregoing is description about the computation device 40 including the FFT device 47 according to the present example embodiment. Note that, in the computation device 40, at least one of the first data sorting processing unit 41, the second data sorting processing unit 43, and the third data sorting processing unit 46 only needs to include either of the data sorting processing devices according to the first to third example embodiments. For example, in a case of the FFT device 47 excluding the first data sorting processing unit 41 and the second data sorting processing unit 43, the second data sorting processing unit 43 only needs to include either of the data sorting processing devices according to the first to third example embodiments.

[Dataflow]

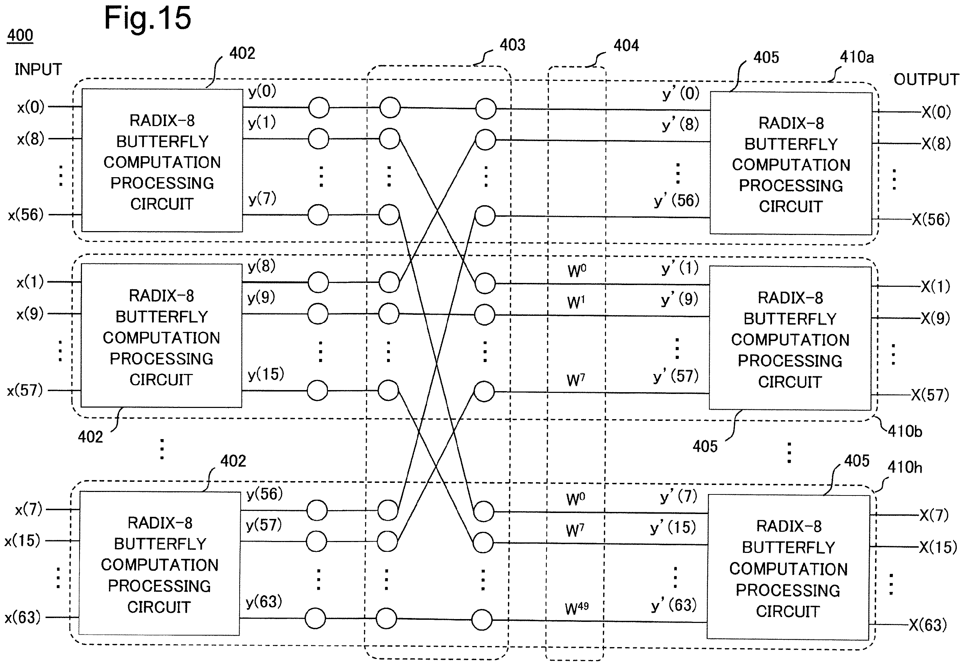

Next, an example is described in which the FFT device 47 processes 64 points FFT, which is decomposed into two-stage radix-8 butterfly processing, by a pipeline circuit method with use of a general Prime Factor method according to a dataflow 400 illustrated in Fig. 15. Note that, in the example of Fig. 15, it is assumed that a configuration surrounded by a dotted-line frame (FFT device 47) performs 64 points FFT processing in parallel with respect to eight pieces of data.

The dataflow 400 of Fig. 15 includes butterfly computation processing 402, data sorting processing 403, twist multiplication processing 404, and butterfly computation processing 405. In the butterfly computation processing 402 and the butterfly computation processing 405, radix-8 butterfly computation processing is performed sixteen times in total.

When the point number of FFT is large, a circuit of an enormous scale is required to achieve the entirety of the dataflow 400 of Fig. 15. In view of the above, when the point number of FFT is large, a circuit is not configured in association with all processing of the dataflow 400, but a part of processing of the dataflow 400 is performed by either of the circuits. Specifically, by iteratively using a circuit for achieving a part of processing of the dataflow 400 according to required processing performance, the entirety of FFT processing is achieved. In the example of Fig. 15, processing is performed by dividing the dataflow 400 into eight partial dataflows 410a to h.

For example, when the FFT device 47 is generated as a physical circuit for performing FFT processing in parallel with respect to eight pieces of data in the dataflow 400 of Fig. 15, 64 points FFT processing can be achieved by performing iterative processing eight times in total.

When iterative processing is performed eight times, processing corresponding to each of the partial dataflows 410a to h to be performed with respect to eight pieces of data is performed in an order. Note that, in Fig. 15, the partial dataflow 410c, the partial dataflow 410d, the partial dataflow 410e, the partial dataflow 410f, and the partial dataflow 410g are omitted.

Specifically, at a first time, processing corresponding to the partial dataflow 410a is performed, and at a second time, processing corresponding to the partial dataflow 410b is performed. Hereinafter likewise, at a third time, processing corresponding to the partial dataflow 410c is performed, at a fourth time, processing corresponding to the partial dataflow 410d is performed, at a fifth time, processing corresponding to the partial dataflow 410e is performed, at a sixth time, processing corresponding to the partial dataflow 410f is performed, and at a seventh time, processing corresponding to the partial dataflow 410g is performed successively. Further, at an eighth time, processing corresponding to the partial dataflow 405h is performed. By a series of processing as described above, it is possible to achieve 64 points FFT processing.

In the dataflow 400 of Fig. 15, when an FFT block size is indicated by N (where N is a natural number), the FFT device 47 receives, as an input, time domain data x(n) (n=0, 1, ..., N-1). The FFT device 47 performs Fourier transform with respect to the input time domain data x(n) by FFT processing, and generates and outputs a frequency domain signal X(k) (k=0, 1, ... , N-1). Note that, also when inverse fast Fourier transform (IFFT) processing is performed, a basic configuration of the dataflow 400 of Fig. 15 is the same.

At this occasion, the FFT device 47 receives, as the input data x(n), sixty-four pieces of data in total, namely, eight pieces of data each in a period of eight cycles in sequential order (Fig. 2). Note that, regarding an input of the input data x(n), the numbers 0 to 63 in the grids of Fig. 2 denote a suffix n of x(n).

Specifically, in a first cycle, the FFT device 47 receives, as an input, eight pieces of data x(0), x(1), ... , and x(7) constituting a data array P1. In second cycle, the FFT device 47 receives, as an input, eight pieces of data x(8), x(9), ... , and x(15) constituting a data array P2. Likewise, in third cycle to eighth cycle, the FFT device 47 receives, as an input, data constituting data arrays P3 to P8.

Likewise, the FFT device 47 outputs, as output data X(k), the sixty-four pieces of data, namely, eight pieces of data each in a period of eight cycles in sequential order (Fig. 2). Note that, regarding an output of the output data X(k), numbers 0 to 63 in the table of Fig. 2 denote a suffix k of X(k).

Specifically, in the first cycle, the FFT device 47 outputs eight pieces of data X(0), X(1), ..., and X(7) constituting the data array P1. In second cycle, the FFT device 47 outputs eight pieces of data X(8), X(9), ..., and X(15) constituting the data array P2. Likewise, in third cycle to eighth cycle, the FFT device 47 outputs data constituting the data arrays P3 to P8.

Bit-reverse order illustrated in Fig. 3 is associated with an input data array to radix-8 butterfly processing 502 of the first row in the dataflow diagram illustrated in Fig. 15. Specifically, in the first cycle, the FFT device 47 receives, as an input, eight pieces of data x(0), x(8), ... , and x(56) constituting the data array P1. Further, in second cycle, the FFT device 47 receives, as an input, eight pieces of data x(1), x(9), ... , and x(57) constituting the data array P2. Likewise, in third cycle to eighth cycle, the FFT 47 receives, as an input, data constituting the data arrays P3 to P8.

Each row ps(i) in Fig. 2 and eight rows qs(i) in Fig. 3 respectively indicate the i-th piece of data to be input in a next row. Eight numbers included in each data array are identification information for specifying one of points of FFT, and specifically, is a value of the suffix n of x(n).

Note that sequential order and bit-reverse order are not limited to the ones exemplified in Fig 2 and Fig. 3. Specifically, as described above, each data array in sequential order may be generated by arranging data in an order according to the number of points of FFT, the number of cycles, or the number of pieces of data to be processed in parallel. Further, as described above, each data array in bit-reverse order may be generated by interchanging an order with respect to progress of a cycle, and an order with respect to a data position, regarding data to be input in sequential order.

(Fifth Example Embodiment)

Next, a digital filter device according to a fifth example embodiment of the present invention is described with reference to a drawing.

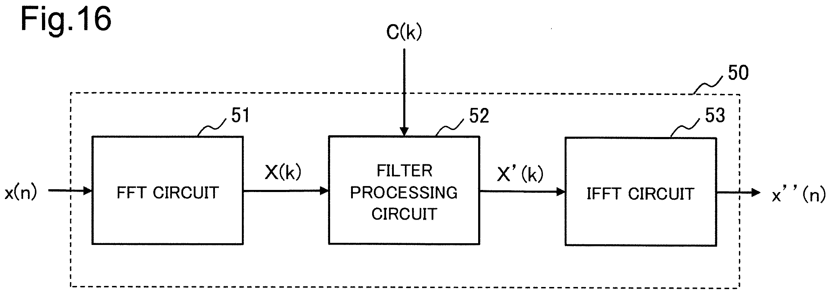

Fig. 16 is a block diagram illustrating a configuration of a digital filter device 50 according to the present example embodiment. The digital filter device 50 includes an FFT circuit 51, a filter processing circuit 52, and an IFFT circuit 53. At least one of the FFT circuit 51 and the IFFT circuit 53 includes a data sorting processing device described in each of the example embodiments of the present invention.

The FFT circuit 51 receives, as an input, a complex signal x(n) in a time domain. Note that, in the present example embodiment, n is an integer: $0 \leq n \leq N-1$, which indicates a signal sample number on a time domain, and N is a natural number indicating a transform sample number of FFT(FFT block size). The complex signal x(n) is expressed as the following equation 4 by using a real part r(n), an imaginary part s(n), and an imaginary unit j.

$$x(n)=r(n)+js(n)\ldots(4)$$

The FFT circuit 51 transforms the input complex signal x(n) into a complex signal X(k) in a frequency domain by FFT. Note that, in the present example embodiment, k is an integer: $0 \leq k \leq N-1$, which indicates a frequency number on a frequency domain. The complex signal X(k) is expressed as the following equation 5 by using a real part A(k), an imaginary part B(k), and an imaginary unit j.

$$X(k)=A(k)+jB(k)\ldots(5)$$

The FFT circuit 51 outputs the complex signal X(k) to the filter processing circuit 52.

The filter processing circuit 52 performs complex filter processing by complex multiplication by using a filter coefficient C(k) with respect to the complex signal X(k) to be input from the FFT circuit 51, and calculates a complex signal X'(k). The complex signal X'(k) is calculated by the following equation 6.

$$X'(k)=X(k)\times C(k)\ldots(6)$$

The filter processing circuit 52 outputs the calculated complex signal X'(k) to the IFFT circuit 53.

The IFFT circuit 53 generates a complex signal X"(n) in a time domain by IFFT with respect to the input complex signal X'(k). The IFFT circuit 53 outputs the generated complex signal X"(n).

As described above, a digital filter device according to the present example embodiment is able to reduce a circuit scale of a circuit for performing filter processing, as compared with a general circuit, by employing a fast Fourier transform device or an inverse Fourier transform device including a data sorting device according to each of the example embodiments.

(Hardware)

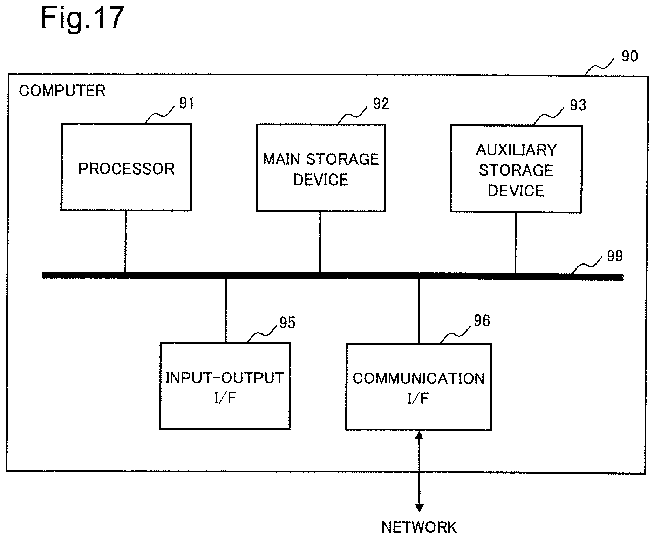

Herein, a hardware configuration of a digital filter device according to the fifth example embodiment of the present invention is described by way of an information processing device 90 in Fig. 17, as one example. Note that the information processing device 90 in Fig. 17 is a configuration example for achieving a digital filter device according to the fifth example embodiment of the present invention, and does not limit the scope of the present invention.

As illustrated in Fig. 17, the information processing device 90 includes a processor 91, a main storage device 92, an auxiliary storage device 93, an input-output interface 95, and a communication interface 96. Note that, in Fig. 17, an interface is abbreviated as I/F. The processor 91, the main storage device 92, the auxiliary storage device 93, the input-output interface 95, and the communication interface 96 are connected via a bus 99 in such a way as to communicate data with one another. Further, the processor 91, the main storage device 92, the auxiliary storage device 93, and the input-output interface 95 are connected to a network such as the Internet and an intranet via the communication interface 96.

The processor 91 develops a program stored in the auxiliary storage device 93 or the like on the main storage device 92, and executes the developed program. The present example embodiment may employ a configuration in which a software program installed in the information processing device 90 is used. The processor 91 performs processing by a fast Fourier transform device according to the present example embodiment.

The main storage device 92 has an area in which a program is developed. The main storage device 92 may be configured as a volatile memory such as a dynamic random access memory (DRAM), for example. Further, a non-volatile memory such as a magnetoresistive random access memory (MRAM) may be configured/added as the main storage device 92.

The auxiliary storage device 93 stores various pieces of data. The auxiliary storage device 93 is configured by a local disk such as a hard disk and a flash memory. Note that it is also possible to omit the auxiliary storage device 93 by causing the main storage device 92 to store various pieces of data.

The input-output interface 95 is an interface for connecting the information processing device 90 and peripheral equipment. The communication interface 96 is an interface for connecting an external system and an external device via a network such as the Internet and an intranet, based on a standard or a specification. The input-output interface 95 and the communication interface 96 may be shared as an interface to be connected to external equipment.

The information processing device 90 may be configured to be connected to input equipment such as a keyboard, a mouse, and a touch panel, as necessary. These pieces of input equipment are used for input of information and settings. Note that, when a touch panel is used as input equipment, a display screen of display equipment may be configured to serve as an interface of the input equipment. Data communication between the processor 91 and the input equipment may be mediated by the input-output interface 95.

Further, the information processing device 90 may include display equipment for displaying information. When the display equipment is included, it is preferable that the information processing device 90 includes a display control device (not illustrated) for controlling indication of the display equipment. The display equipment may be connected to the information processing device 90 via the input-output interface 95.

Further, the information processing device 90 may also include a disk drive, as necessary. The disk drive is connected to the bus 99. The disk drive mediates, between the processor 91 and an unillustrated recording medium (program recording medium), data/program reading from the recording medium, writing a processing result of the information processing device 90 into the recording medium, and the like. The recording medium can be achieved by an optical recording medium such as a compact disc (CD) and a digital versatile disc (DVD), for example. Further, the recording medium may be achieved by a semiconductor recording medium such as a universal serial bus (USB) memory and a secure digital (SD) card, a magnetic recording medium such as a flexible disk, or another recording medium.

The foregoing is one example of a hardware configuration for enabling a digital filter device according to the fifth example embodiment of the present invention. Note that a hardware configuration in Fig. 17 is one example of a hardware configuration of a digital filter device according to the fifth example embodiment of the present invention, and does not limit the scope of the present invention. Further, a program for causing a computer to execute processing relating to a digital filter device according to the fifth example embodiment of the present invention is also included in the scope of the present invention. Furthermore, a program recording medium recording a program relating to digital filter processing according to the fifth example embodiment of the present invention is also included in the scope of the present invention.

Constituent elements of a fast Fourier transform device according to each of the above-described example embodiments can be combined voluntarily. Further, constituent elements of a fast Fourier transform device according to each of the example embodiments may be achieved by a software. Furthermore, a fast Fourier transform device according to each of the example embodiments may be achieved as a circuit.

In the foregoing, the present invention is described with reference to the example embodiments. The present invention, however, is not limited to the above-described example embodiments. A configuration and details of the present invention can be modified in various ways comprehensible to a person skilled in the art within the scope of the present invention.

This application is based upon and claims the benefit of priority from Japanese Patent Application No. 2017-152658, filed on August 7, 2017, the disclosure of which is incorporated herein in its entirety by reference.

[Reference signs List]

| 10 | Data sorting processing device |
|---|---|
| 11 | First data sorting unit |
| 12 | Second data sorting unit |
| 20 | Data sorting processing device |
| 21 | First data sorting unit |
| 22 | Second data sorting unit |
| 30 | Intra-data-set sorting device |
| 31, 34, 35 | Selector |
| 32, 33 | Flipflop |
| 40 | Computation device |
| 41 | First data sorting processing unit |
| 42 | First butterfly computation processing unit |
| 43 | Second data sorting processing unit |
| 44 | Twist multiplication processing unit |
| 45 | Second butterfly computation processing unit |
| 46 | Third data sorting processing unit |
| 47 | FFT device |
| 50 | Digital filter device |
| 51 | FFT circuit |
| 52 | Filter processing circuit |
| 53 | IFFT circuit |
| 211 | First data distributing unit |
| 213 | RAM circuit |
| 215 | Second data distributing unit |
| 221 | Intra-data-set sorting unit |

**Claims**

1. A fast Fourier transform device comprising:

data sorting processing means including first data sorting means for inputting a plurality of pieces of first data in a first order, and sorting the plurality of pieces of first data into a third order, and
second data sorting means for inputting the plurality of pieces of first data in the third order, and sorting the plurality of pieces of first data into a second order, wherein
the first data sorting means sorts the plurality of pieces of first data from the first order into the third order by using, as a unit of transfer, a data set constituted of a predetermined number of pieces of data included in the plurality of pieces of first data, and
the second data sorting means sorts the plurality of pieces of first data from the third order into the second order by performing sorting among the predetermined number of pieces of data included in the data set.

2. The fast Fourier transform device according to claim 1, wherein
the first data sorting means includes a first storage circuit,
the second data sorting means includes a second storage circuit, and
the second storage circuit is different from the first storage circuit in configuration and characteristic, and a circuit configuration is determined based on a unit of processing of data writing processing and reading processing.

3. The fast Fourier transform device according to claim 2, wherein
the first storage circuit performs writing processing and reading processing in a unit of a word constituted of a plurality of data bits, and
the second storage circuit performs data writing processing and reading processing that do not depend on the unit of a word.

4. The fast Fourier transform device according to claim 2 or 3, wherein
the first data sorting means sorts the plurality of pieces of first data into the third order by using, as a unit of transfer, the data set constituted of data to be input in parallel in a plurality of consecutive cycles.

5. The fast Fourier transform device according to claim 4, wherein
the first storage circuit stores data of a cycle number larger than that of the second storage circuit.

6. The fast Fourier transform device according to any one of claims 1 to 5, further comprising:

first butterfly computation processing means for inputting a plurality of pieces of input data, and outputting, to the data sorting processing means, the plurality of pieces of first data in the first order by performing butterfly computation on the plurality of pieces of input data;

twist multiplication processing means for inputting the plurality of pieces of first data from the data sorting processing means in the second order, and outputting a plurality of pieces of second data on which complex rotation on a complex plane for the plurality of pieces of input first data; and

second butterfly computation processing means for inputting the plurality of pieces of second data from the twist multiplication processing means, and outputting a plurality of pieces of output data by performing butterfly computation on the plurality of pieces of second data.

7. A digital filter device comprising the fast Fourier transform device according to any one of claims 1 to 6.

8. A data sorting processing device comprising second sorting means for

inputting a plurality of pieces of first data in a first order,

sorting the plurality of pieces of first data into a third order by using, as a unit of transfer, a data set constituted of a predetermined number of pieces of data included in the plurality of pieces of first data, and sorting the plurality of pieces of first data sorted in the third order into a second order by performing sorting among the predetermined number of pieces of data included in the data set.

9. A fast Fourier transform processing method comprising

data sorting processing of

inputting a plurality of pieces of first data in a first order,

sorting the plurality of pieces of first data into a third order by using, as a unit of transfer, a data set constituted of a predetermined number of pieces of data included in the plurality of pieces of first data, and sorting the plurality of pieces of first data sorted in the third order into a second order by performing sorting among the predetermined number of pieces of data included in the data set.

10. A program recording medium recording a program causing a computer to execute fast Fourier transform processing including:

processing of inputting a plurality of pieces of first data in a first order;

processing of sorting the plurality of pieces of first data into a third order by using, as a unit of transfer, a data set constituted of a predetermined number of pieces of data included in the plurality of pieces of first data, and

processing of sorting the plurality of pieces of first data sorted in the third order into a second order by performing sorting among the predetermined number of pieces of data included in the data set.

Fig.1

# Fig.2

← CYCLE

| 8 | 7 | 6 | 5 | 4 | 3 | 2 | 1 | |
|---|---|---|---|---|---|---|---|---|
| P8 | P7 | P6 | P5 | P4 | P3 | P2 | P1 | |
| 56 | 48 | 40 | 32 | 24 | 16 | 8 | 0 | ps(0) |
| 57 | 49 | 41 | 33 | 25 | 17 | 9 | 1 | ps(1) |
| 58 | 50 | 42 | 34 | 26 | 18 | 10 | 2 | ps(2) |
| 59 | 51 | 43 | 35 | 27 | 19 | 11 | 3 | ps(3) |
| 60 | 52 | 44 | 36 | 28 | 20 | 12 | 4 | ps(4) |
| 61 | 53 | 45 | 37 | 29 | 21 | 13 | 5 | ps(5) |
| 62 | 54 | 46 | 38 | 30 | 22 | 14 | 6 | ps(6) |
| 63 | 55 | 47 | 39 | 31 | 23 | 15 | 7 | ps(7) |

# Fig.3

← CYCLE

| 8 | 7 | 6 | 5 | 4 | 3 | 2 | 1 | |
|---|---|---|---|---|---|---|---|---|
| Q8 | Q7 | Q6 | Q5 | Q4 | Q3 | Q2 | Q1 | |
| 7 | 6 | 5 | 4 | 3 | 2 | 1 | 0 | qs(0) |
| 15 | 14 | 13 | 12 | 11 | 10 | 9 | 8 | qs(1) |
| 23 | 22 | 21 | 20 | 19 | 18 | 17 | 16 | qs(2) |
| 31 | 30 | 29 | 28 | 27 | 26 | 25 | 24 | qs(3) |
| 39 | 38 | 37 | 36 | 35 | 34 | 33 | 32 | qs(4) |
| 47 | 46 | 45 | 44 | 43 | 42 | 41 | 40 | qs(5) |
| 55 | 54 | 53 | 52 | 51 | 50 | 49 | 48 | qs(6) |
| 63 | 62 | 61 | 60 | 59 | 58 | 57 | 56 | qs(7) |

# Fig.4

← CYCLE

| | 8 | 7 | 6 | 5 | 4 | 3 | 2 | 1 | |
|---|---|---|---|---|---|---|---|---|---|
| | P8 | P7 | P6 | P5 | P4 | P3 | P2 | P1 | |
| | 56 | 48 | 40 | 32 | 24 | 16 | 8 | 0 | ps(0) |
| | 57 | 49 | 41 | 33 | 25 | 17 | 9 | 1 | ps(1) |
| | 58 | 50 | 42 | 34 | 26 | 18 | 10 | 2 | ps(2) |
| | 59 | 51 | 43 | 35 | 27 | 19 | 11 | 3 | ps(3) |
| | 60 | 52 | 44 | 36 | 28 | 20 | 12 | 4 | ps(4) |
| | 61 | 53 | 45 | 37 | 29 | 21 | 13 | 5 | ps(5) |
| | 62 | 54 | 46 | 38 | 30 | 22 | 14 | 6 | ps(6) |
| | 63 | 55 | 47 | 39 | 31 | 23 | 15 | 7 | ps(7) |

# Fig.5

← CYCLE

| 8 | 7 | 6 | 5 | 4 | 3 | 2 | 1 |
|---|---|---|---|---|---|---|---|
| P8 | P7 | P6 | P5 | P4 | P3 | P2 | P1 |

| | | | | | | | | |
|---|---|---|---|---|---|---|---|---|
| 14 | 6 | 12 | 4 | 10 | 2 | 8 | 0 | ps(0) |
| 15 | 7 | 13 | 5 | 11 | 3 | 9 | 1 | ps(1) |
| 30 | 22 | 28 | 20 | 26 | 18 | 24 | 16 | ps(2) |
| 31 | 23 | 29 | 21 | 27 | 19 | 25 | 17 | ps(3) |
| 46 | 38 | 44 | 36 | 42 | 34 | 40 | 32 | ps(4) |
| 47 | 39 | 45 | 37 | 43 | 35 | 41 | 33 | ps(5) |
| 62 | 54 | 60 | 52 | 58 | 50 | 56 | 48 | ps(6) |
| 63 | 55 | 61 | 53 | 59 | 51 | 57 | 49 | ps(7) |

# Fig.6

EP 3 667 522 A1

# Fig.7

| | t0 | t1 | t2 | t3 | t4 | t5 | t6 | t7 |
|---|---|---|---|---|---|---|---|---|
| in0 | 0 | 8 | 16 | 24 | 32 | 40 | 48 | 56 |
| in1 | 1 | 9 | 17 | 25 | 33 | 41 | 49 | 57 |
| in2 | 2 | 10 | 18 | 26 | 34 | 42 | 50 | 58 |
| in3 | 3 | 11 | 19 | 27 | 35 | 43 | 51 | 59 |
| in4 | 4 | 12 | 20 | 28 | 36 | 44 | 52 | 60 |
| in5 | 5 | 13 | 21 | 29 | 37 | 45 | 53 | 61 |
| in6 | 6 | 14 | 22 | 30 | 38 | 46 | 54 | 62 |
| in7 | 7 | 15 | 23 | 31 | 39 | 47 | 55 | 63 |
| 212a | 0 | 8 | 22 | 30 | 36 | 44 | 50 | 58 |
| 212b | 1 | 9 | 23 | 31 | 37 | 45 | 51 | 59 |
| 212c | 2 | 10 | 16 | 24 | 38 | 46 | 52 | 60 |
| 212d | 3 | 11 | 17 | 25 | 39 | 47 | 53 | 61 |
| 212e | 4 | 12 | 18 | 26 | 32 | 40 | 54 | 62 |
| 212f | 5 | 13 | 19 | 27 | 33 | 41 | 55 | 63 |
| 212g | 6 | 14 | 20 | 28 | 34 | 42 | 48 | 56 |
| 212h | 7 | 15 | 21 | 29 | 35 | 43 | 49 | 57 |

INPUT

OUTPUT

EP 3 667 522 A1

**Fig.8**

| | t0 | t1 | t2 | t3 | t4 | t5 | t6 | t7 | t8 | t9 | t10 | t11 | t12 | t13 | t14 | t15 |
|---|---|---|---|---|---|---|---|---|---|---|---|---|---|---|---|---|
| 212a | 0 | 8 | 22 | 30 | 36 | 44 | 50 | 58 | | | | | | | | |
| 212b | 1 | 9 | 23 | 31 | 37 | 45 | 51 | 59 | | | | | | | | |
| 212c | 2 | 10 | 16 | 24 | 38 | 46 | 52 | 60 | | | | | | | | |
| 212d | 3 | 11 | 17 | 25 | 39 | 47 | 53 | 61 | | | | | | | | |
| 212e | 4 | 12 | 18 | 26 | 32 | 40 | 54 | 62 | | | | | | | | |
| 212f | 5 | 13 | 19 | 27 | 33 | 41 | 55 | 63 | | | | | | | | |
| 212g | 6 | 14 | 20 | 28 | 34 | 42 | 48 | 56 | | | | | | | | |
| 212h | 7 | 15 | 21 | 29 | 35 | 43 | 49 | 57 | | | | | | | | |
| 214a | | | | | | | | | 0 | 8 | 50 | 58 | 36 | 44 | 22 | 30 |
| 214b | | | | | | | | | 1 | 9 | 51 | 59 | 37 | 45 | 23 | 31 |
| 214c | | | | | | | | | 16 | 24 | 2 | 10 | 52 | 60 | 38 | 46 |
| 214d | | | | | | | | | 17 | 25 | 3 | 11 | 53 | 61 | 39 | 47 |
| 214e | | | | | | | | | 32 | 40 | 18 | 26 | 4 | 12 | 54 | 62 |
| 214f | | | | | | | | | 33 | 41 | 19 | 27 | 5 | 13 | 55 | 63 |
| 214g | | | | | | | | | 48 | 56 | 34 | 42 | 20 | 28 | 6 | 14 |
| 214h | | | | | | | | | 49 | 57 | 35 | 43 | 21 | 29 | 7 | 15 |

INPUT: 212a–212h

OUTPUT: 214a–214h

# Fig.9

| | t8 | t9 | t10 | t11 | t12 | t13 | t14 | t15 |
|---|---|---|---|---|---|---|---|---|
| 214a | 0 | 8 | 50 | 58 | 36 | 44 | 22 | 30 |
| 214b | 1 | 9 | 51 | 59 | 37 | 45 | 23 | 31 |
| 214c | 16 | 24 | 2 | 10 | 52 | 60 | 38 | 46 |
| 214d | 17 | 25 | 3 | 11 | 53 | 61 | 39 | 47 |
| 214e | 32 | 40 | 18 | 26 | 4 | 12 | 54 | 62 |
| 214f | 33 | 41 | 19 | 27 | 5 | 13 | 55 | 63 |
| 214g | 48 | 56 | 34 | 42 | 20 | 28 | 6 | 14 |
| 214h | 49 | 57 | 35 | 43 | 21 | 29 | 7 | 15 |
| 220a | 0 | 8 | 2 | 10 | 4 | 12 | 6 | 14 |
| 220b | 1 | 9 | 3 | 11 | 5 | 13 | 7 | 15 |
| 220c | 16 | 24 | 18 | 26 | 20 | 28 | 22 | 30 |
| 220d | 17 | 25 | 19 | 27 | 21 | 29 | 23 | 31 |
| 220e | 32 | 40 | 34 | 42 | 36 | 44 | 38 | 46 |
| 220f | 33 | 41 | 35 | 43 | 37 | 45 | 39 | 47 |
| 220g | 48 | 56 | 50 | 58 | 52 | 60 | 54 | 62 |
| 220h | 49 | 57 | 51 | 59 | 53 | 61 | 55 | 63 |

INPUT (rows 214a–214h)

OUTPUT (rows 220a–220h)

# Fig.10

|  | t8 | t9 | t10 | t11 | t12 | t13 | t14 | t15 | t16 |
|---|---|---|---|---|---|---|---|---|---|
| 220a | 0 | 8 | 2 | 10 | 4 | 12 | 6 | 14 | |
| 220b | 1 | 9 | 3 | 11 | 5 | 13 | 7 | 15 | |
| 220c | 16 | 24 | 18 | 26 | 20 | 28 | 22 | 30 | |
| 220d | 17 | 25 | 19 | 27 | 21 | 29 | 23 | 31 | |
| 220e | 32 | 40 | 34 | 42 | 36 | 44 | 38 | 46 | |
| 220f | 33 | 41 | 35 | 43 | 37 | 45 | 39 | 47 | |
| 220g | 48 | 56 | 50 | 58 | 52 | 60 | 54 | 62 | |
| 220h | 49 | 57 | 51 | 59 | 53 | 61 | 55 | 63 | |
| out0 | | 0 | 1 | 2 | 3 | 4 | 5 | 6 | 7 |
| out1 | | 8 | 9 | 10 | 11 | 12 | 13 | 14 | 15 |
| out2 | | 16 | 17 | 18 | 19 | 20 | 21 | 22 | 23 |
| out3 | | 24 | 25 | 26 | 27 | 28 | 29 | 30 | 31 |
| out4 | | 32 | 33 | 34 | 35 | 36 | 37 | 38 | 39 |
| out5 | | 40 | 41 | 42 | 43 | 44 | 45 | 46 | 47 |
| out6 | | 48 | 49 | 50 | 51 | 52 | 53 | 54 | 55 |
| out7 | | 56 | 57 | 58 | 59 | 60 | 61 | 62 | 63 |

INPUT (220a–220h), OUTPUT (out0–out7)

# Fig.11

EP 3 667 522 A1

# Fig.12

# Fig.13

| | t0 | t1 | t2 |
|---|---|---|---|
| INPUT TERMINAL inA | 0 | 8 | |
| INPUT TERMINAL inB | 1 | 9 | |
| SELECTOR 31 | 0 | 9 | |
| FLIPFLOP 32 | | 0 | 9 |
| FLIPFLOP 33 | | 1 | |
| SELECTOR 34 | | 0 | 1 |
| SELECTOR 35 | | 8 | 9 |
| OUTPUT TERMINAL outA | | 0 | 1 |
| OUTPUT TERMINAL outB | | 8 | 9 |

# Fig.14

EP 3 667 522 A1

## Fig.15

Fig.16

# Fig.17

90

COMPUTER

91

PROCESSOR

92

MAIN STORAGE
DEVICE

93

AUXILIARY
STORAGE
DEVICE

99

95

INPUT-OUTPUT
I/F

96

COMMUNICATION
I/F

NETWORK

## INTERNATIONAL SEARCH REPORT

| International application No. |
| --- |
| PCT/JP2018/029280 |

**A. CLASSIFICATION OF SUBJECT MATTER**
Int.Cl. G06F17/14(2006.01)i

According to International Patent Classification (IPC) or to both national classification and IPC

**B. FIELDS SEARCHED**

Minimum documentation searched (classification system followed by classification symbols)
Int.Cl. G06F17/14

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2-101574 A (JEOL LTD.) 13 April 1990, page 3, lower left column, line 1 to page 4, upper left column, line 6, fig. 1 & US 4977533 A, column 4, lines 6-64, fig. 3 | 1, 7–10<br>6<br>2–5 |
| Y | WO 2015/087497 A1 (NEC CORP.) 18 June 2015, paragraphs [0030]-[0073], fig. 1 & US 2016/0357706 A1, paragraphs [0062]-[0123], fig. 1 | 6 |

☐ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17 October 2018 (17.10.2018) | 30 October 2018 (30.10.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H81996137832 B
- JP 2001056806 A
- JP 2012022500 A
- JP H101998283341 B
- JP 2017152658 A

### Non-patent literature cited in the description

- An Algorithm for the Machine Calculation of Complex Fourier Series. **J.W.COOLEY ; J.W.TUKEY.** Mathematics of Computation. American Mathematical Society, April 1965, vol. 19, 297-301
- **D.P.KOLBA.** A Prime Factor FFT Algorithm Using High-Speed Convolution. *IEEE Trans. on Acoustics, US, IEEE Signal Processing Society,* August 1977, vol. 29 (4), 281-294